(19) Europäisches Patentamt / European Patent Office / Office européen des brevets

(11) **EP 4 645 432 A2**

(12) **EUROPEAN PATENT APPLICATION**

(43) Date of publication:
**05.11.2025 Bulletin 2025/45**

(21) Application number: **25169287.7**

(22) Date of filing: **08.04.2025**

(51) International Patent Classification (IPC):
**H01M 4/131** (2010.01)    **H01M 4/36** (2006.01)
**H01M 4/505** (2010.01)    **H01M 4/525** (2010.01)
**H01M 4/58** (2010.01)    **H01M 10/0525** (2010.01)
**H01M 4/62** (2006.01)

(52) Cooperative Patent Classification (CPC):
**H01M 4/131; H01M 4/36; H01M 4/364;
H01M 4/366; H01M 4/505; H01M 4/525;
H01M 4/5825; H01M 10/0525;** H01M 4/621;
H01M 4/624

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH LA MA MD TN**

(30) Priority: **29.04.2024 KR 20240057006**

(71) Applicant: **SAMSUNG SDI CO., LTD.
Yongin-si, Gyeonggi-do 17084 (KR)**

(72) Inventors:
• **KIM, Young-Ki
17084 Yongin-si (KR)**
• **CHOI, Aram
17084 Yongin-si (KR)**
• **KIM, Sangmi
17084 Yongin-si (KR)**
• **DOO, Sungwook
17084 Yongin-si (KR)**
• **KANG, Gwiwoon
17084 Yongin-si (KR)**
• **LEE, Soonrewl
17084 Yongin-si (KR)**

(74) Representative: **Marks & Clerk LLP
15 Fetter Lane
London EC4A 1BW (GB)**

(54) **POSITIVE ELECTRODE ACTIVE MATERIAL FOR RECHARGEABLE LITHIUM BATTERY, POSITIVE ELECTRODE INCLUDING THE SAME, AND RECHARGEABLE LITHIUM BATTERY INCLUDING THE SAME**

(57)    A positive electrode for a rechargeable lithium battery and a rechargeable lithium battery including the positive electrode are provided. The positive electrode includes a current collector, a first positive electrode active material layer on the current collector, and a second positive electrode active material layer on the first positive electrode active material layer. The first positive electrode active material layer includes a first particle represented by Formula 1 and having the form of a single particle, and a second particle represented by Formula 2. The second positive electrode active material layer includes a third particle represented by Formula 3 and having the form of a single particle. The first particle is present in a greater content (e.g., amount) than the second particle.

FIG. 6

10

EP 4 645 432 A2

**Description**

**BACKGROUND**

**1. Field**

According to one or more embodiments, the present disclosure relates to a positive electrode active material for a rechargeable lithium battery, a positive electrode including the positive electrode active material, and a rechargeable lithium battery including the positive electrode. For example, the present disclosure relates a positive electrode active material containing an olivine-based lithium compound, a positive electrode active material containing a spinel-based lithium compound, a positive electrode including each of the positive electrode active materials, and a rechargeable lithium battery including the positive electrode.

**2. Description of the Related Art**

Recently, the rapid spread and popularization of battery-powered electronics, such as mobile phones, laptop computers, and/or the like, and/or electric vehicles, has driven a sharp rise in demand for rechargeable batteries equipped or provided with relatively high energy density and high capacity. Accordingly, extensive research efforts are directed towards improving the performance of rechargeable lithium batteries, e.g., as a driving power source for hybrid and/or electric vehicles, and/or as a power storage power source, e.g., for resident power storage (e.g., a power wall).

Rechargeable lithium batteries include a positive electrode and a negative electrode, each including an active material that allows intercalation and deintercalation of lithium ions, and an electrolyte (e.g., an electrolyte solution). The batteries produce electrical energy from redox reactions that take place as lithium ions are intercalated into the positive electrode and/or deintercalated from the negative electrode during the discharge process.

**SUMMARY**

One or more aspects are directed toward a positive electrode active material that is economical and has high energy density, high average voltage, and excellent or suitable lifetime.

One or more aspects are directed toward a positive electrode that is economical and has high energy density, high average voltage, and excellent or suitable lifetime.

According to one or more embodiments, a positive electrode for a rechargeable lithium battery includes a current collector, a first positive electrode active material layer on the current collector, and a second positive electrode active material layer on the first positive electrode active material layer.

The first positive electrode active material layer includes a first particle including a compound of Formula 1 and having an olivine structure, and a second particle including a compound of Formula 2 and having a spinel structure, and the second positive electrode active material layer includes a third particle including a compound of Formula 3 and having an olivine structure.

The first particle is in the form of a single particle, and the third particle is in the form of a single particle.

The first particle has a greater weight than the second particle.

**Formula 1** $\qquad$ $Li_{a1}Mnz_1Fe_{x1}B1_{y1}PO_{4-c1}$

In Formula 1, B1 is at least one element selected from among the group consisting of Al, Ti, V, and Mg, and $0.8 < a1 \leq 1.2$, $0.4 \leq z1 \leq 0.8$, $0.2 \leq x1 \leq 0.6$, $0 \leq y1 \leq 0.05$, and $0 \leq c1 \leq 0.05$ are satisfied.

**Formula 2** $\qquad$ $Li_{a2}Mn_{x2}B2_{y2}O_{4-c2}$

In Formula 2, B2 is at least one element selected from among the group consisting of Al and Mg, and $0.8 < a2 \leq 1.2$, $1.9 \leq x2 \leq 2.05$, $0 \leq y2 \leq 0.05$, and $0 \leq c2 \leq 0.05$ are satisfied.

**Formula 3** $\qquad$ $Li_{a3}Mn_{z3}Fe_{x3}B3_{y3}PO_{4-c3}$

In Formula 3, B3 is at least one element selected from among the group consisting of Al, Ti, V, and Mg, and $0.8 < a3 \leq 1.2$, $0.4 \leq z3 \leq 0.8$, $0 \leq x3 \leq 0.6$, $0 \leq y3 \leq 0.05$, and $0 \leq c3 \leq 0.05$ are satisfied.

According to other embodiments, a positive electrode for a rechargeable lithium battery includes a current collector, a first positive electrode active material layer on the current collector, and a second positive electrode active material layer on the first positive electrode active material layer.

The first positive electrode active material layer includes a first particle comprising an olivine structured compound of Formula 1 and having a form of a single particle, and a second particle comprising a spinel structured compound of Formula 2, and a first functional additive,

the second positive electrode active material layer includes a third particle comprising an olivine structured compound of Formula 3 and having a form of a single particle, and a second functional additive,
the first functional additive and the second functional additive each include a conductive material and a binder, and
a weight ratio of the first functional additive in the first positive electrode active material layer is less than a weight ratio of the second functional additive in the second positive electrode active material layer.

At least some of the above and other features of the invention are set out in the claims.

## BRIEF DESCRIPTION OF THE DRAWINGS

The accompanying drawings are included to provide a further understanding of the present disclosure and are incorporated in and constitute a part of this specification. The drawings illustrate embodiments of the present disclosure and, together with the description, serve to explain principles of the present disclosure. In the drawings:

FIG. 1 is a simplified conceptual view showing a rechargeable lithium battery according to one or more embodiments of the present disclosure;
FIGS. 2-5 are each schematic views showing a rechargeable lithium battery according to one or more embodiments, and FIG. 2 shows a cylindrical battery, FIG. 3 shows a prismatic battery, and FIGS. 4 and 5 show pouch-type or kind batteries;
FIG. 6 is a cross-sectional view showing a positive electrode for a rechargeable lithium battery according to one or more embodiments of the present disclosure;
FIG. 7 is an enlarged view showing a first positive electrode active material layer of a rechargeable lithium battery according to one or more embodiments of the present disclosure;
FIG. 8 is an enlarged view showing a second positive electrode active material layer of a rechargeable lithium battery according to one or more embodiments of the present disclosure;
FIG. 9 is a scanning electron microscope (SEM) image showing a first particle according to one or more embodiments of the present disclosure;
FIG. 10 is an SEM image showing a second particle according to one or more embodiments of the present disclosure; and

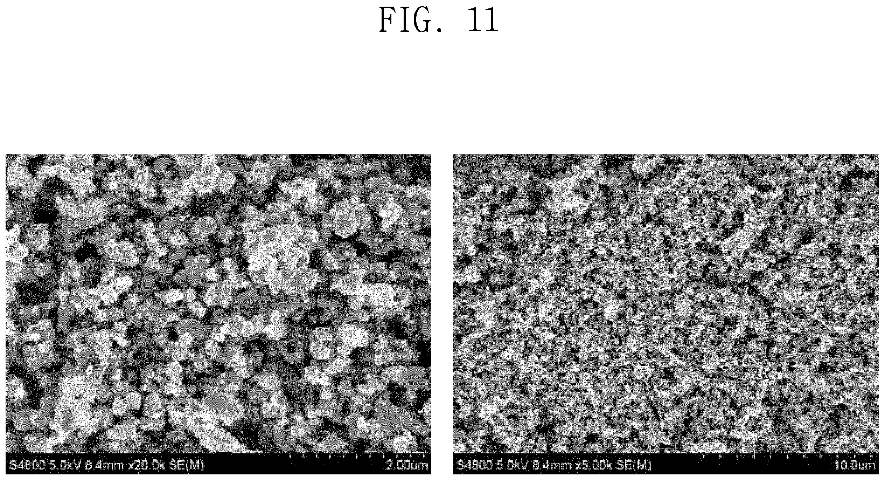

FIG. 11 is an SEM image showing a third particle according to one or more embodiments of the present disclosure.

## DETAILED DESCRIPTION

Hereinafter, embodiments of the present disclosure will be described clearly and in more detail to such an extent that those skilled in the art easily implement the present disclosure. In order to sufficiently understand the configuration and effects of the present disclosure, embodiments of the present disclosure will be described with reference to the accompanying drawings to explain aspects of the present description. It should be noted, however, that the present disclosure is not limited to the following embodiments, but, rather, the present disclosure is defined by the scope of claims, and may be implemented in one or more suitable forms and modified as required. The embodiments herein are provided so that the present disclosure will be thorough and complete and will fully convey the scope of the present disclosure to those skilled in the art.

Herein, it will be understood that if (e.g., when) a component is referred to as being on another component, the component may be directly on another component, or an intervening third component may be present. In contrast, if (e.g., when) an element is referred to as being "directly on" another element, there are no intervening elements present. In some embodiments, in the drawings, thicknesses of components are exaggerated for effectively describing technical contents. Like reference numerals refer to like elements throughout, and duplicative descriptions thereof may not be provided.

Unless otherwise specified herein, the expression of singular form (e.g., "a," "an," and/or "the") may include the expression of plural form, including "at least one," unless the context clearly dictates otherwise. In some embodiments, unless otherwise specified, the phrase "A or B" may indicate "A but not B", "B but not A", or "A and B". The terms "comprises," "comprise," "comprising," "includes," "including," "include," "having," "has," and/or "have" as used herein are intended to designate the presence of an embodied aspect, number, step (e.g., act or task), element, and/or a (e.g., any suitable) combination thereof, and do not exclude the presence or addition of one or more other features, numbers, steps (e.g., acts or tasks), elements, components, and/or a (e.g., any suitable) combination thereof.

As used herein, the term "combination thereof" may refer to a mixture, a stack, a composite, a copolymer, an alloy,

**EP 4 645 432 A2**

a blend, or a reaction product.

In one or more embodiments, the term "layer" herein includes not only a shape formed on the whole surface if (e.g., when) viewed from a plan view, but also a shape formed on a partial surface.

It will be understood that, although the terms "first," "second," "third," and/or the like may be utilized herein to describe one or more suitable elements, components, regions, layers and/or sections, these elements, components, regions, layers and/or sections should not be limited by these terms. These terms are only utilized to distinguish one element, component, region, layer or section from another element, component, region, layer, or section. Thus, a first element, component, region, layer, or section described herein may be termed a second element, component, region, layer or section without departing from the teachings set forth herein.

As utilized herein, the term "and/or" includes any, and all, combinations of one or more of the associated listed items. Expressions such as "at least one of," "one of," and "selected from," if (e.g., when) preceding a list of elements, modify the entire list of elements and do not modify the individual elements of the list. For example, the expressions "at least one of a to c," "at least one of a, b or c," and "at least one of a, b and/or c" may indicate only a, only b, only c, both (e.g., simultaneously) a and b, both (e.g., simultaneously) a and c, both (e.g., simultaneously) b and c, all of a, b, and c, or variations thereof.

Spatially relative terms, such as "beneath," "below," "lower," "above," "upper" and/or the like, may be utilized herein to easily describe the relationship between one element or feature and another element or feature. It will be understood that the spatially relative terms are intended to encompass different orientations of a device in utilization or operation in addition to the orientation illustrated in the drawings. For example, if (e.g., when) the device in the drawings is turned over, elements described as "below" or "beneath" other elements or features will be oriented "above" the other elements or features. Thus, the example term "below" can encompass both (e.g., simultaneously) the orientations of above and below. The device may be otherwise oriented (rotated 90 degrees or at other orientations), and the spatially relative terms utilized herein may be interpreted accordingly.

The terminology utilized herein is utilized for the purpose of describing particular embodiments only, and is not intended to limit the present disclosure. Unless otherwise defined, all terms (including chemical, technical and scientific terms) utilized herein have the same meaning as commonly understood by one of ordinary skill in the art to which this disclosure pertains. It will be further understood that terms, such as those defined in commonly utilized dictionaries, should be interpreted as having a meaning that is consistent with their meaning in the context of the related art and the present disclosure, and will not be interpreted in an idealized or overly formal sense.

Example embodiments are described herein with reference to cross-sectional views, which are schematic views of embodiments. As such, variations from the shapes of the illustrations as a result, for example, of manufacturing techniques and/or tolerances, are to be expected. Thus, embodiments described herein should not be construed as being limited to the particular shapes of regions as illustrated herein but are to include deviations in shapes that result, for example, from manufacturing. For example, a region illustrated or described as flat may, typically, have rough and/or nonlinear features. Moreover, sharp angles that are illustrated may be rounded. Thus, the regions illustrated in the drawings are schematic in nature and their shapes are not intended to illustrate the precise shape of a region and are not intended to limit the scope of the present claims.

The term "may" will be understood to refer to "one or more embodiments of the present disclosure," some of which include the described element and some of which exclude that element and/or include an alternate element. Similarly, alternative language such as "or" refers to "one or more embodiments of the present disclosure," each including a corresponding listed item.

Further, in this specification, the phrase "on a plane," or "plan view," indicates viewing a target portion from the top, and the phrase "on a cross-section" indicates viewing a cross-section formed by vertically cutting a target portion from the side.

**Definitions**

The term "particle diameter", "particle size", and/or the like as utilized herein refers to an average diameter of particles if (e.g., when) the particles are spherical, and refers to an average major axis length of particles if (e.g., when) the particles are non-spherical. For example, a particle diameter may be an average particle diameter. In some embodiments, a particle diameter may be defined as an average particle diameter (D50) indicating the diameter of particles having a cumulative volume of 50 volume% in the particle size distribution. The average particle diameter (D50) may be measured by a method widely suitable (known) to those skilled in the art, for example, by a particle size analyzer, a transmission electron micrograph, or a scanning electron micrograph. In one or more embodiments, an average particle diameter (D50) value may be obtained by measuring a subject using a dynamic light-scattering-based measuring device, performing data analysis, counting the number of particles for each particle size range, and then calculating the value therefrom. In one or more embodiments, the average particle diameter (D50) may be measured using a laser diffraction method. In the measuring using the laser diffraction method, for example, target particles are distributed in a distribution solvent, introduced into a commercially available laser diffraction particle diameter measuring device (e.g., MT 3000 available from Microtrac, Ltd.), irradiated with ultrasonic waves of about 28 kHz at a power of 60 W, and then an average particle diameter (D50) based on 50% of the particle diameter distribution in the measuring device may be calculated.

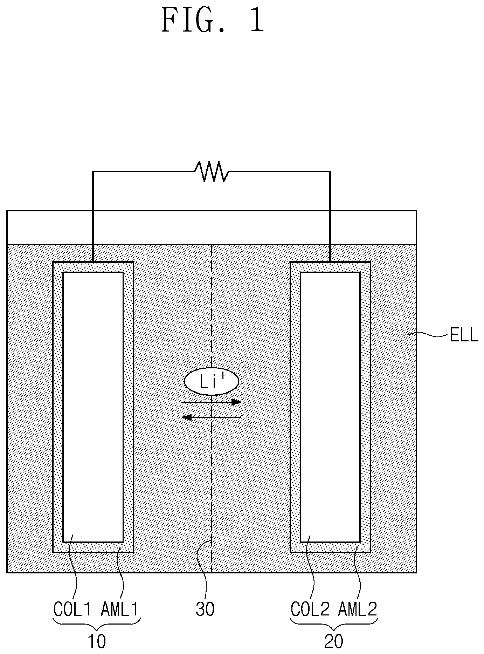

FIG. 1 is a simplified conceptual view showing a rechargeable lithium battery according to one or more embodiments of the present disclosure. Referring to FIG. 1, the rechargeable lithium battery may include a positive electrode 10, a negative electrode 20, a separator 30, and an electrolyte (e.g., an electrolyte solution) ELL.

The positive electrode 10 and the negative electrode 20 may be spaced and/or apart (e.g., spaced apart or separated) from each other by the separator 30. The separator 30 may be disposed between the positive electrode 10 and the negative electrode 20. The positive electrode 10, the negative electrode 20 and the separator 30 may be in contact with the electrolyte solution ELL. The positive electrode 10, the negative electrode 20 and the separator 30 may be impregnated in (e.g., with) the electrolyte solution ELL.

The electrolyte solution ELL may be a medium for transferring lithium ions between the positive electrode 10 and the negative electrode 20. In the electrolyte solution ELL, the lithium ions may move through the separator 30 toward the positive electrode 10 or the negative electrode 20.

## Positive Electrode 10

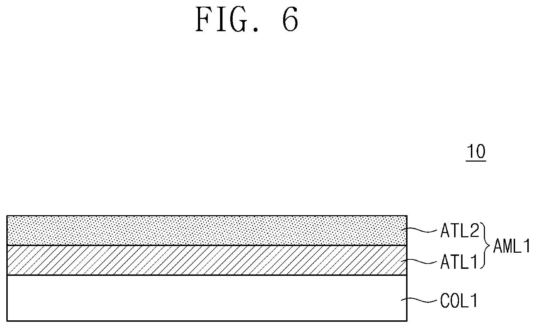

The positive electrode 10 for a rechargeable lithium battery includes a current collector COL1 and a positive electrode active material layer AML1 on the current collector. The positive electrode active material layer AML1 may include a positive electrode active material and may further include a binder and/or a conductive material. A detailed description of the positive electrode active material layer AML1 according to one or more embodiments of the present disclosure will be described in more detail later through FIG. 6. Al may be used as the current collector COL1, but one or more embodiments of the present disclosure is not limited thereto.

## Negative Electrode 20

The negative electrode 20 for a rechargeable lithium battery may include a current collector COL2 and a negative electrode active material layer AML2 on the current collector COL2. The negative electrode active material layer AML2 may include a negative electrode active material, and may further include a binder and/or a conductive material (e.g., an electrically conductive material).

For example, the negative electrode active material layer AML2 may include about 90 wt% to about 99 wt% of the negative electrode active material, about 0.5 wt% to about 5 wt% of the binder, and about 0 wt% to about 5 wt% of the conductive material.

The binder may serve to attach the negative electrode active material particles well to each other and also to attach the negative electrode active material well to the current collector COL2. The binder may include a non-aqueous binder, an aqueous binder, a dry binder, and/or a (e.g., any suitable) combination thereof.

The non-aqueous binder may include polyvinyl chloride, carboxylated polyvinyl chloride, polyvinyl fluoride, an ethylene propylene copolymer, polystyrene, polyurethane, polytetrafluoroethylene, polyvinylidene fluoride, polyethylene, polypropylene, polyamideimide, polyimide, and/or a (e.g., any suitable) combination thereof.

The aqueous binder may be selected from among a styrene-butadiene rubber, a (meth)acrylated styrene-butadiene rubber, a (meth)acrylonitrile-butadiene rubber, a (meth)acrylic rubber, a butyl rubber, a fluoro rubber, polyethylene oxide, polyvinyl pyrrolidone, polyepichlorohydrin, polyphosphazene, poly(meth)acrylonitrile, an ethylene propylene diene copolymer, polyvinylpyridine, chlorosulfonated polyethylene, latex, a polyester resin, a (meth)acrylic resin, a phenol resin, an epoxy resin, polyvinyl alcohol, and/or a (e.g., any suitable) combination thereof.

When an aqueous binder is used as the negative electrode binder, a cellulose-based compound capable of imparting viscosity may be further included. The cellulose-based compound may include at least one of carboxymethyl cellulose, hydroxypropylmethyl cellulose, methyl cellulose, or an alkali metal salt thereof. The alkali metal may include Na, K, or Li.

The dry binder may be a polymer material that is capable of being fibrous. For example, the dry binder may be polytetrafluoroethylene, polyvinylidene fluoride, a polyvinylidene fluoride-hexafluoropropylene copolymer, polyethylene oxide, and/or a (e.g., any suitable) combination thereof.

The conductive material may be used to impart conductivity (e.g., electrical conductivity) to the electrode. Any material that does not cause chemical change (e.g., does not cause an undesirable chemical change in the rechargeable lithium battery) and that conducts electrons may be used in the battery. Non-limiting examples thereof may include a carbon-based material such as natural graphite, artificial graphite, carbon black, acetylene black, ketjen black, a carbon fiber, a carbon nanofiber, and a carbon nanotube; a metal-based material including copper, nickel, aluminium, silver, and/or the like, in a form of a metal powder or a metal fiber; a conductive polymer such as a polyphenylene derivative; and/or a (e.g., any suitable) mixture thereof.

The current collector COL2 may include a copper foil, a nickel foil, a stainless steel foil, a titanium foil, a nickel foam, a copper foam, a polymer substrate coated with a conductive metal, and/or a (e.g., any suitable) combination thereof.

**Negative Electrode Active Material**

The negative electrode active material in the negative electrode active material layer AML2 may include a material that reversibly intercalates/deintercalates lithium ions, a lithium metal, a lithium metal alloy, a material capable of doping/dedoping lithium, or a transition metal oxide.

The material that reversibly intercalates/deintercalates lithium ions may include a carbon-based negative electrode active material, such as, for example. crystalline carbon, amorphous carbon and/or a (e.g., any suitable) combination thereof. Examples of the crystalline carbon may be graphite such as irregular, planar, flaky, spherical, or fibrous natural graphite or artificial graphite, and examples of the amorphous carbon may be soft carbon (low-temperature fired carbon), hard carbon, mesophase pitch carbide, fired cokes, and/or the like.

The lithium metal alloy includes an alloy of lithium and a metal selected from among Na, K, Rb, Cs, Fr, Be, Mg, Ca, Sr, Si, Sb, Pb, In, Zn, Ba, Ra, Ge, Al, and Sn.

The material capable of doping/dedoping lithium may be a Si-based negative electrode active material or a Sn-based negative electrode active material. The Si-based negative electrode active material may include silicon, a silicon-carbon composite, $SiOx$ ($0 < x \leq 2$), a Si-Q alloy (where Q is selected from among an alkali metal, an alkaline-earth metal, a Group 13 element, a Group 14 element (excluding Si), a Group 15 element, a Group 16 element, a transition metal, a rare earth element, and/or a (e.g., any suitable) combination thereof). The Sn-based negative electrode active material may include Sn, $SnOx$ ($0 < x \leq 2$), e.g., $SnO_2$, a Sn-based alloy, and/or a (e.g., any suitable) combination thereof.

The silicon-carbon composite may be a composite of silicon and amorphous carbon. According to one or more embodiments, the silicon-carbon composite may be in a form of silicon particles and amorphous carbon coated on the surface of the silicon particles. For example, the silicon-carbon composite may include a secondary particle (core) in which primary silicon particles are assembled, and an amorphous carbon coating layer (shell) on the surface of the secondary particle. The amorphous carbon may also be between the primary silicon particles, and, for example, the primary silicon particles may be coated with the amorphous carbon. The secondary particle may exist dispersed in an amorphous carbon matrix.

The silicon-carbon composite may further include crystalline carbon. For example, the silicon-carbon composite may include a core including crystalline carbon and silicon particles and an amorphous carbon coating layer on a surface of the core.

The Si-based negative electrode active material or the Sn-based negative electrode active material may be used in combination with a carbon-based negative electrode active material.

**Separator 30**

Depending on the type or kind of the rechargeable lithium battery, the separator 30 may be present between the positive electrode 10 and the negative electrode 20. The separator 30 may include polyethylene, polypropylene, polyvinylidene fluoride, or a multilayer film of two or more layers thereof, and a mixed multilayer film such as a polyethylene/polypropylene two-layer separator, polyethylene/polypropylene/polyethylene three-layer separator, polypropylene/polyethylene/polypropylene three-layer separator, and/or the like.

The separator 30 may include a porous substrate and a coating layer including an organic material, an inorganic material, and/or a (e.g., any suitable) combination thereof on one or both surfaces (e.g., opposite surfaces) of the porous substrate.

The porous substrate may be a polymer film formed of any one polymer selected from among polyolefin such as polyethylene and polypropylene, polyester such as polyethylene terephthalate and polybutylene terephthalate, polyacetal, polyamide, polyimide, polycarbonate, polyether ketone, polyarylether ketone, polyetherimide, polyamideimide, polybenzimidazole, polyethersulfone, polyphenylene oxide, a cyclic olefin copolymer, polyphenylene sulfide, polyethylene naphthalate, a glass fiber, and polytetrafluoroethylene (e.g., TEFLON), or a copolymer or mixture of two or more thereof.

The organic material may include a polyvinylidene fluoride-based polymer or a (meth)acrylic polymer.

The inorganic material may include inorganic particles selected from among $Al_2O_3$, $SiO_2$, $TiO_2$, $SnO_2$, $CeO_2$, MgO, NiO, CaO, GaO, ZnO, $ZrO_2$, $Y_2O_3$, $SrTiO_3$, $BaTiO_3$, $Mg(OH)_2$, boehmite, and/or a (e.g., any suitable) combination thereof, but the present disclosure is not limited thereto.

The organic material and the inorganic material may be mixed in one coating layer, or a coating layer including an organic material and a coating layer including an inorganic material may be stacked.

## Electrolyte Solution ELL

The electrolyte solution ELL for a rechargeable lithium battery may include a non-aqueous organic solvent and a lithium salt.

The non-aqueous organic solvent may serve as a medium for transmitting ions taking part in the electrochemical reaction of a battery.

The non-aqueous organic solvent may be a carbonate-based, ester-based, ether-based, ketone-based, or alcohol-based solvent, an aprotic solvent, and/or a (e.g., any suitable) combination thereof.

The carbonate-based solvent may include dimethyl carbonate (DMC), diethyl carbonate (DEC), dipropyl carbonate (DPC), methylpropyl carbonate (MPC), ethylpropyl carbonate (EPC), methylethyl carbonate (MEC), ethylene carbonate (EC), propylene carbonate (PC), butylene carbonate (BC), fluoroethylene carbonate (FEC), and/or the like.

The ester-based solvent may include methyl acetate, ethyl acetate, n-propyl acetate, dimethyl acetate, methyl propionate, ethyl propionate, decanolide, mevalonolactone, valerolactone, caprolactone, and/or the like.

The ether-based solvent may include dibutyl ether, tetraglyme, diglyme, dimethoxyethane, 2-methyltetrahydrofuran, 2,5-dimethyltetrahydrofuran, tetrahydrofuran, and/or the like. In addition, the ketone-based solvent may include cyclohexanone, and/or the like. The alcohol-based solvent may include ethanol, isopropyl alcohol, and/or the like and the aprotic solvent may include nitriles such as R-CN (wherein R is a C2 to C20 linear, branched, or cyclic hydrocarbon group, a double bond, an aromatic ring, or an ether bond), and/or the like; amides such as dimethylformamide; dioxolanes such as 1,3-dioxolane, 1,4-dioxolane, and/or the like; sulfolanes, and/or the like.

The non-aqueous organic solvents may be used alone or in combination of two or more.

In addition, if (e.g., when) using a carbonate-based solvent, a cyclic carbonate and a chain carbonate may be mixed and used, and the cyclic carbonate and the chain carbonate may be mixed in a volume ratio of about 1:1 to about 1:9.

The lithium salt dissolved in the organic solvent supplies lithium ions in a battery, enables a basic operation of a rechargeable lithium battery, and improves transportation of the lithium ions between positive and negative electrodes. Examples of the lithium salt include at least one selected from among $LiPF_6$, $LiBF_4$, $LiSbF_6$, $LiAsF_6$, $LiClO_4$, $LiAlO_2$, $LiAlCl_4$, $LiPO_2F_2$, LiCl, Lil, $LiN(SO_3C_2Fs)_2$, $Li(FSO_2)_2N$ (lithium bis(fluorosulfonyl)imide, LiFSI), $LiC_4F_9SO_3$, $LiN(C_xF_{2x+1}SO_2)$ $(C_yF_{2y+1}SO_2)$ (wherein x and y are integers of 1 to 20), lithium trifluoromethane sulfonate, lithium tetrafluoroethanesulfonate, lithium difluoro(oxalato)borate (LiDFOB), lithium difluorobis(oxalato)phosphate (LiDFBOP), and lithium bis(oxalato) borate (LiBOB).

## Rechargeable Lithium Battery

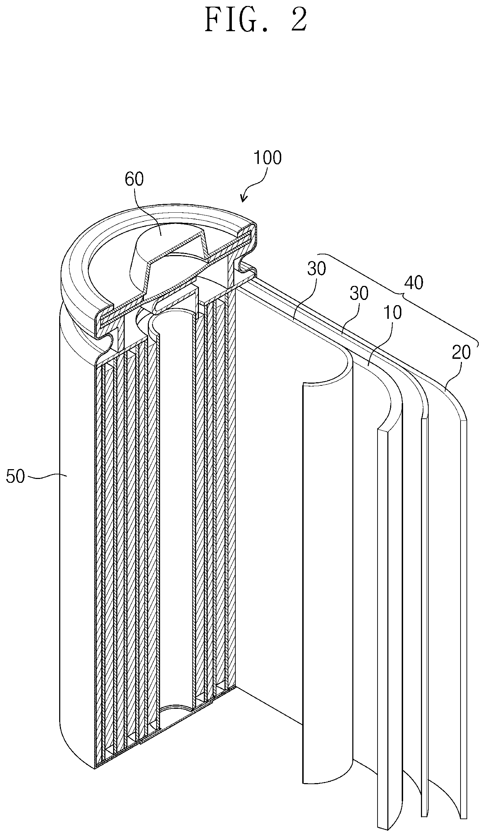

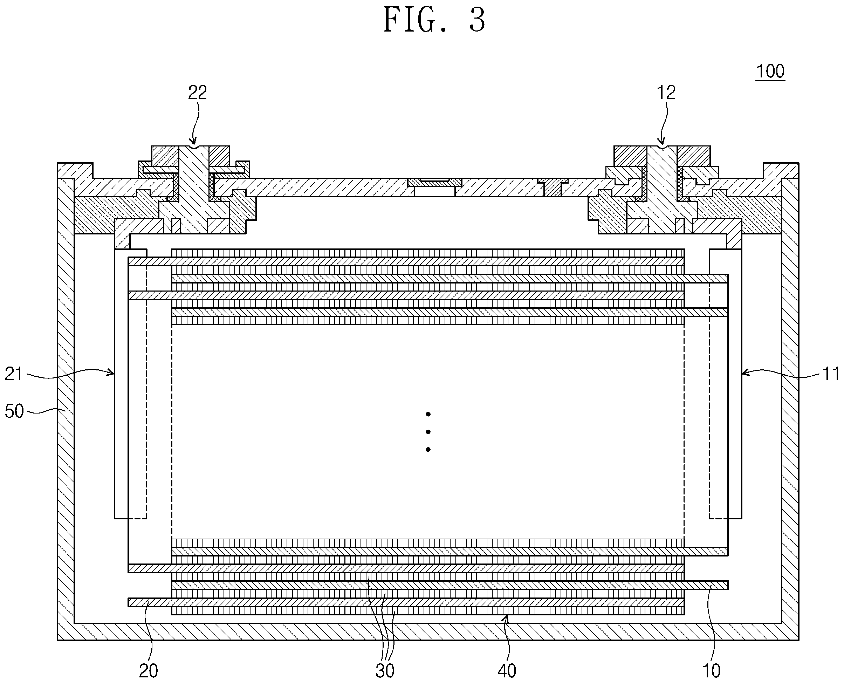

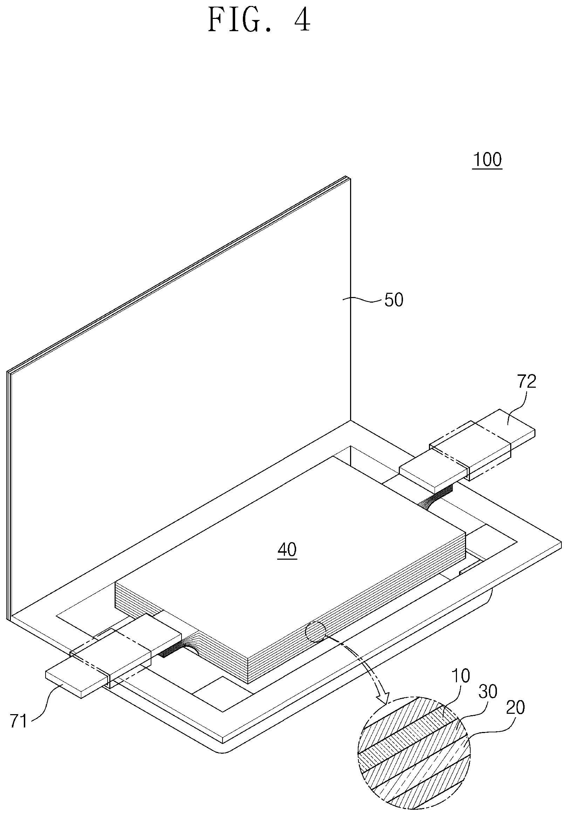

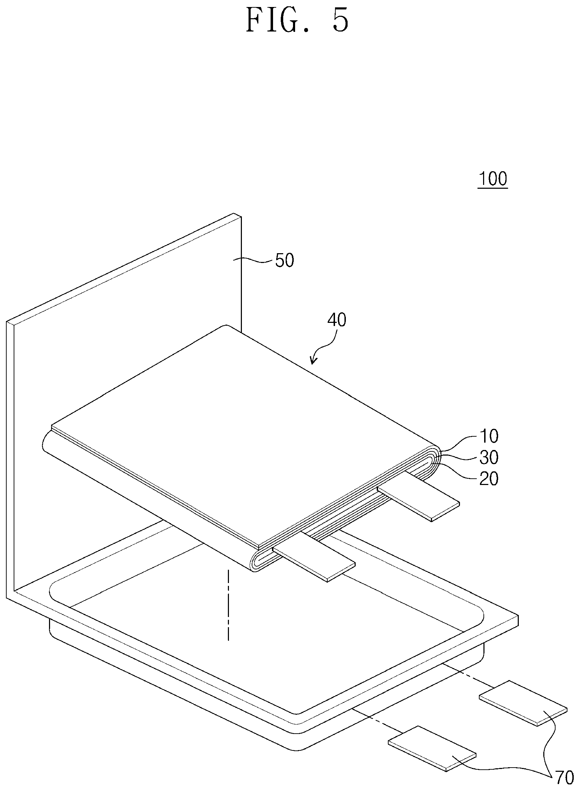

The rechargeable lithium battery may be classified into cylindrical, prismatic, pouch, or coin-type or kind batteries, and/or the like depending on their shape. FIGS. 2 to 5 are schematic views each illustrating a rechargeable lithium battery according to one or more embodiments. FIG. 2 shows a cylindrical battery, FIG. 3 shows a prismatic battery, and FIGS. 4 and 5 each show pouch-type or kind batteries. Referring to FIGS. 2 to 5, the rechargeable lithium battery 100 may include an electrode assembly 40 including a separator 30 between a positive electrode 10 and a negative electrode 20, and a case 50 in which the electrode assembly 40 is included. The positive electrode 10, the negative electrode 20, and the separator 30 may be impregnated with an electrolyte solution. The rechargeable lithium battery 100 may include a sealing member 60 sealing the case 50, as shown in FIG. 2. In FIG. 3, the rechargeable lithium battery 100 may include a positive electrode lead tab 11, a positive terminal 12, a negative electrode lead tab 21, and a negative terminal 22. As shown in each of FIGS. 4 and 5, the rechargeable lithium battery 100 may include an electrode tab 70, which may be, for example, a positive electrode tab 71 and a negative electrode tab 72 serving as an electrical path for inducing the current formed in the electrode assembly 40 to the outside.

The rechargeable lithium battery according to one or more embodiments may be applied to automobiles, mobile phones, and/or one or more suitable types (kinds) of electric devices, as non-limiting examples.

FIG. 6 is a cross-sectional view showing a positive electrode for a rechargeable lithium battery according to one or more embodiments of the present disclosure. Referring to FIG. 6, the positive electrode 10 for a rechargeable lithium battery includes the current collector COL1 (see FIG. 1) and the positive electrode active material layer AML1 (see FIG. 1) as described herein. The positive electrode active material layer AML1 includes a first positive electrode active material layer ATL1, and a second positive electrode active material layer ATL2 stacked on the first positive electrode active material layer ATL1.

Hereinafter, each of the first positive electrode active material layer ATL1 and the second positive electrode active material layer ATL2 will be described in more detail.

## First Positive Electrode Active Material Layer ATL1

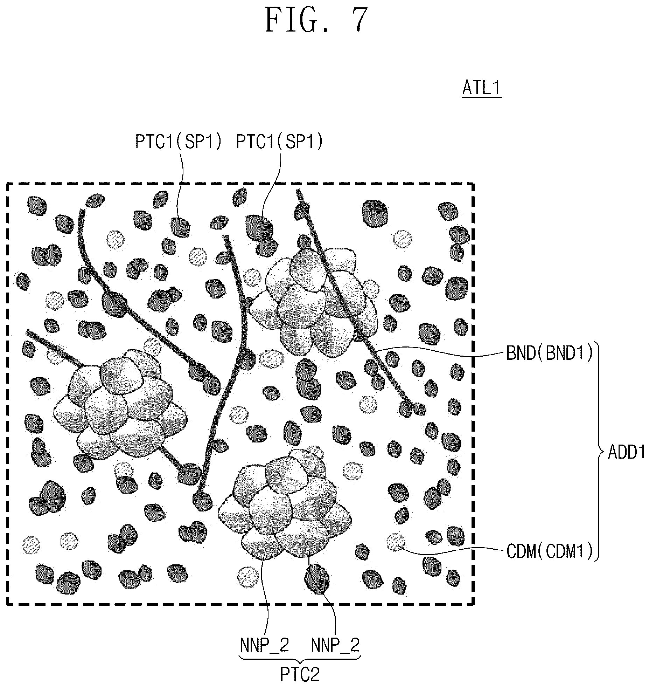

FIG. 7 is an enlarged view showing a first positive electrode active material layer ATL1 of a positive electrode for a rechargeable lithium battery according to one or more embodiments of the present disclosure.

The first positive electrode active material layer ATL1 may include a first particle PTC1, a second particle PTC2, and a first functional additive ADD1 (BND1 and CDM1). The first functional additive ADD1 may include a first binder BND1 and a first conductive material CDM1.

The first binder BND1 may combine the first particle PTC1 and the first conductive material CDM1. In some embodiments, the first binder BND1 may stably fix the first positive electrode active material layer ATL1 to the current collector COL1. For example, the first binder BND1 may include at least one selected from the group consisting of polyvinyl alcohol, carboxymethyl cellulose, hydroxypropyl cellulose, diacetyl cellulose, polyvinyl chloride, carboxylated polyvinyl chloride, polyvinyl fluoride, an ethylene oxide-containing polymer, polyvinyl pyrrolidone, polyurethane, polytetrafluoroethylene, polyvinylidene fluoride, polyethylene, polypropylene, a styrene-butadiene rubber, a (meth)acrylated styrene-butadiene rubber, an epoxy resin, a (meth)acrylic resin, a polyester resin, and nylon, but the present disclosure is not limited thereto.

The first conductive material CDM1 may be used to improve conductivity of the first positive electrode active material layer ATL1. Any conductive material that does not cause chemical changes in the first positive electrode active material layer ATL1 may be used as the first conductive material CDM1 without limitation. For example, the first conductive material CDM1 may include a carbon-based material such as natural graphite, artificial graphite, carbon black, acetylene black, ketjen black, a carbon fiber, a carbon nanofiber, and a carbon nanotube; a metal-based material including copper, nickel, aluminium, silver, and/or the like in a form of a metal powder or a metal fiber; a conductive polymer such as a polyphenylene derivative; and/or a (e.g., any suitable) mixture thereof.

Hereinafter, each of the first particle PTC1 and the second particle PTC2 in the first positive electrode active material layer ATL1 will be described in more detail.

**First Particle PTC1**

The first particle PTC1 includes an olivine-based lithium compound represented by Formula 1.

$$\text{Formula 1} \qquad Li_{a1}Mnz_1Fe_{x1}B1_{y1}PO_{4-c1}$$

In Formula 1, $0.8 < a1 \leq 1.2$, $0.4 \leq z1 \leq 0.8$, $0.2 \leq x1 \leq 0.6$, $0 \leq y1 \leq 0.05$ (e.g. $0.001 \leq y1 \leq 0.05$), and $0 \leq c1 \leq 0.05$ (e.g. $0 < c1 \leq 0.05$) are satisfied. B1 is at least one (e.g., one or more) element selected from among the group consisting of Al, Ti, V, and Mg. B1 may be a dopant with which the first particle PTC1 is doped. For example, B1 may include Ti.

The first particle PTC1 may further include carbon derived from the positive electrode active material layer AML1 described herein. The first particle PTC1 (e.g. in the form of a single particle) may have a carbon element content (e.g., amount) of about 0.5 wt% to about 5 wt%, about 0.5 wt% to about 3 wt%, or about 0.5 wt% to about 2 wt%. The carbon element content may be determined by Thermogravimetric Analysis, CHNS Elemental Analysis, Raman Spectroscopy, X-ray Photoelectron Spectroscopy (XPS), or Inductively Coupled Plasma Optical Emission Spectroscopy (ICP-OES). These methods are generally applicable and widely used in the industry to ensure accurate and reliable measurement of carbon content in electrode materials. For example, Thermogravimetric Analysis (TGA) may be commonly employed to measure weight loss due to carbon oxidation, providing a quantitative assessment. Additionally, CHNS Elemental Analysis is widely used to determine the carbon content by detecting $CO_2$ generated during combustion. For structural characterization, Raman Spectroscopy can be utilized to distinguish between different forms of carbon, while X-ray Photoelectron Spectroscopy (XPS) is useful for analyzing the chemical bonding states of surface carbon. In some cases, Inductively Coupled Plasma Optical Emission Spectroscopy (ICP-OES) may also be applied for compositional analysis.

The first particle PTC1 may be in the form of a single particle. For example, the first particle PTC1 may be a single particle including at least one primary particle or several primary particles. Herein, the single particle may indicate a single type or kind of particle having no grain boundary inside thereof. The single particle may indicate one single particle morphologically (e.g., one single monolithic particle) present in an independent phase in which particles are not aggregated (e.g., non-agglomerated) with one another, a particle having a monolith structure, a particle having a one-body structure, or a non-aggregated (e.g., non-agglomerated) particle. For example, the single particle may be a single crystal. In one or more embodiments, the single particle may be a particle containing several crystals. The single particle may be in an isolated form. In one or more embodiments, the single particle may be in the form in which about 2 to about 100 first primary particles SP1 are attached to one another.

The first particle PTC1 may be a nanomorphous positive electrode active material. The first particle PTC1 may include at least one (e.g., one or more) first primary particle SP1. In one or more embodiments, the first particle PTC1 may be in the shape of sphere or oval in which first primary particles are aggregated (e.g., agglomerated). In one or more embodiments, the first particle PTC1 may not have a spherical shape but have an irregular shape even if (e.g., when) the first primary particles SP1 are agglomerated.

In one or more embodiments, the average particle diameter may indicate a particle diameter (D50) if (e.g., when) a cumulative volume is about 50 volume% in a particle size distribution. In one or more embodiments, the average particle diameter (D50) of the first particle PTC1 may be a value measured using a particle size analyzer.

In one or more embodiments, the first particle PTC1 may have an average particle diameter of about 500 nanometers (nm) to about 2.5 micrometers ($\mu$m), or about 1 $\mu$m. The size of at least one (e.g., one or more) first primary particle SP1 constituting the first particle PTC1 may be measured using a scanning electron microscope (SEM). In one or more embodiments, the size of the first primary particle SP1 may indicate a diameter measured by randomly selecting about 30 first primary particles SP1 from an electron micrograph of a positive electrode active material. The first primary particle SP1 may be substantially uniform in size. The first primary particle SP1 may have a size of about 100 nm to about 500 nm, or about 100 nm to about 200 nm.

The first particle PTC1 may be in the form of a polycrystal and may include secondary particles in which at least two first primary particles SP1 are aggregated (e.g., agglomerated). For example, one first particle PTC1 may include a plurality of first primary particles SP1 aggregated (e.g., agglomerated) together. The first particle PTC1 composed of the plurality of first primary particles SP1 may be in the shape of sphere or oval.

In one or more embodiments, the average particle diameter may indicate a particle diameter (D50) if (e.g., when) a cumulative volume is about 50 volume% in a particle size distribution. In one or more embodiments, the average particle diameter (D50) of the first particle PTC1 may be a value measured using a particle size analyzer.

The first particle PTC1 including at least one (e.g., one or more) first primary particle SP1 may have an average particle diameter of about 500 nm to about 5 $\mu$m, about 100 nm to about 3 $\mu$m, about 500 nm to about 2.5 $\mu$m, about 3 $\mu$m to about 7 $\mu$m, about 4 $\mu$m to about 6 $\mu$m, or about 5 $\mu$m. The average particle diameter (D50) of the first particle PTC1 may be smaller than an average particle diameter (D50) of the second particle PTC2, as described in more detail elsewhere herein.

The first particle PTC1 may include (e.g., may be) at least one (e.g., one or more) primary particle (or single particle). The size of at least one (e.g., one or more) first primary particle SP1 constituting the first particle PTC1 may be measured using a scanning electron microscope (SEM). In one or more embodiments, the size of the first primary particle SP1 may indicate a diameter measured by randomly selecting about 30 first primary particles SP1 from an electron micrograph of a positive electrode active material. The first primary particle SP1 may be substantially uniform in size.

At least one (e.g., one or more) first primary particle SP1 constituting the first particle PTC1 may have a size of about 100 nm to about 200 nm, about 50 nm to about 150 nm, about 50 nm to about 100 nm, about 100 nm to about 150 nm, or about 200 nm to about 300 nm.

In one or more embodiments, the first particle PTC1 may include a coating layer on a surface thereof. The coating layer may be entirely around (e.g., cover entirely) the surface of the first particle PTC1, or may be partially around (e.g., cover partially) the surface of the first particle PTC1. For example, the coating layer may include carbon and/or a carbon-containing compound. The coating layer may further include at least one (e.g., one or more) selected from among the group consisting of a titanium-containing compound, a magnesium-containing compound, and a vanadium-containing compound. Metal-containing compounds, such as titanium-containing compounds, magnesium-containing compounds, and vanadium-containing compounds, may be, for example, metal oxides, metal hydroxides, metal carbonates, composites thereof, or mixtures thereof. The metal-containing compounds may further include other metals or non-metallic elements. For example, the metal-containing compounds may further include lithium. The first particle PTC1 may have improved structural stability and electrical conductivity through the coating layer.

In one or more embodiments, the first particle PTC1 may further include a grain boundary coating layer on a surface of each of the first primary particles SP1. The grain boundary coating layer may be present inside the first particle PTC1. The grain boundary coating layer may be formed to be applied along an interface between the first primary particles SP1 inside the first particle PTC1. For example, the grain boundary coating layer may be or indicate a material applied onto a grain boundary inside the first particle PTC1.

The grain boundary coating layer may include carbon and/or a carbon-containing compound. The grain boundary coating layer may further include at least one (e.g., one or more) selected from among the group consisting of a titanium-containing compound, a magnesium-containing compound, and a vanadium-containing compound.

The interior (e.g., inside) of the first particle PTC1 described herein may be or indicate the entire interior (e.g., inside) portion of the first particle PTC1 excluding the surface of the first particle PTC1. For example, the interior (e.g., inside) of the first particle PTC1 may be or indicate a region of the entire inside from about 10 nm in depth, or from about 10 nm to about 2 $\mu$m in depth, with respect to the surface of the first particle PTC1.

The first particle PTC1 may further include a grain boundary coating portion, and may thus have greater structural stability and have a substantially uniform coating layer formed on the surface thereof. In some embodiments, the first particle PTC1 may further include a grain boundary coating portion, and may thus have further improved electrical conductivity.

The first particle PTC1 may further include carbon derived from the coating layer and/or the grain boundary coating layer described herein. The first particle PTC1 (e.g. in the form of a secondary particle) may have a carbon element content (e.g., amount) of about 0.5 wt% to about 10 wt%, about 1 wt% to about 3 wt%, or about 1.5 wt% to about 2.5 wt%.

For example, the first particle PTC1 may have a greater content (e.g., amount) of carbon if (e.g., when) in the form of a secondary particle than in the form of a single particle.

The first particle PTC1 may be in the shape of sphere in which a plurality of first primary particles SP1 are aggregated (e.g., agglomerated). The first particle PTC1 may have the first primary particles SP1 closely aggregated (e.g., agglomerated), and may thus exhibit the following characteristics. The first particle may retain (e.g., adhere to or keep) the coating layer and/or the grain boundary coating layer described herein well, and may thus have greater electrical conductivity and improved low-temperature characteristics. Due to the increased bindability of an electrode plate, binder capacity may be reduced. The first particle PTC1 may be in the shape of sphere or oval.

The first particle PTC1 may have a porosity of about 20% to about 40%. A Span value of the first particle PTC1, analyzed through a particle size analyzer, may be about 0.3 to about 0.75. That is, the Span value for the initial particle PTC1, when measured using a particle size analyzer, is in a range from about 0.3 to about 0.75. Here, "Span" refers to a statistical measure that indicates the width of the particle size distribution. It is calculated as the ratio of the difference between the diameter at 90% of the cumulative volume (D90) and the diameter at 10% of the cumulative volume (D10), divided by the diameter at 50% of the cumulative volume (D50). Mathematically, it can be expressed as:

$$\text{Span} = D50 / (D90 - D10)$$

This value helps in understanding the range of particle sizes in a sample, with a smaller Span indicating a more uniform size distribution.

**Second Particle PTC2**

The second particle PTC2 includes a lithium compound having a spinel structure represented by Formula 2.

$$\text{Formula 2} \qquad Li_{a2}Mn_{x2}B2_{y2}O_{4-c2}$$

In Formula 2, $0.8 < a2 \leq 1.2$, $1.9 \leq x2 \leq 2.05$, $0 \leq y2 \leq 0.05$ (e.g. $0.001 \leq y2 \leq 0.05$), and $0 \leq c2 \leq 0.05$ (e.g. $0 < c2 \leq 0.05$) are satisfied. B2 is at least one (e.g., one or more) element selected from among the group consisting of Al and Mg. B2 may be a dopant with which the second particle PTC2 is doped. The dopant may have the aspect of controlling the substantially uniform growth of the second primary particles NNP_2 constituting the second particle PTC2 and improve charging/-discharging efficiency, low-temperature characteristics, and lifetime characteristics of a rechargeable lithium battery. The second particle PTC2 may be provided with benefits including high output characteristics, high structural stability, high average voltage, and excellent or suitable lifetime characteristics.

The second particle PTC2 may have a spinel structure composed of a tetrahedral lattice structure and/or an octahedral lattice structure. The lattice structure has one or more suitable passages, thereby allowing lithium ions to be easily intercalated/deintercalated, resulting in excellent or suitable output characteristics. The second particle PTC2 includes Mn, and may thus be structurally stable. This structural stability protects the electrochemical properties of particles even at high voltages, thereby allowing operation at high voltages and providing excellent or suitable lifetime characteristics.

The second particle PTC2 is a lithium manganese oxide and may be a positive electrode material in which cobalt is replaced with manganese in lithium cobalt oxide. In one or more embodiments of the present disclosure, the second particle PTC2 may have a trace content (e.g., amount) of cobalt (Co), indicating substantially no content (e.g., amount). For example, the second particle PTC2 may have a cobalt (Co) content (e.g., amount) of about 100 parts per million (ppm) or less. The positive electrode active material according to the present disclosure is substantially free of cobalt (Co), thereby providing a rechargeable battery that is economical and has high capacity and operating voltage.

Referring to FIG. 7, the second particle PTC2 may be in the form of a polycrystal and may include secondary particles in which at least two (e.g., two or more) second primary particles NNP_2 are aggregated (e.g., agglomerated). For example, the second particle may be or include a secondary particle that is an agglomeration of a plurality of primary particles. For example, one second particle PTC2 may include a plurality of second primary particles NNP_2 aggregated (e.g., agglomerated) together. The second particle PTC2 composed of the plurality of second primary particles NNP_2 may be in the shape of an agglomerate sphere, and may have an irregular shape even if (e.g., when) the second primary particles NNP_2 agglomerate.

In one or more embodiments, the average particle diameter may indicate a particle diameter (D50) if (e.g., when) a cumulative volume is about 50 volume% in a particle size distribution. In one or more embodiments, the average particle diameter (D50) of the second particle PTC2 may be a value measured using a particle size analyzer. The second particle PTC2 may have an average particle diameter (D50) of about 3 $\mu$m to about 20 $\mu$m, about 4 $\mu$m to about 15 $\mu$m, about 5 $\mu$m

to about 10 μm, or about 3 μm to about 10 μm. For example, the second particle PTC2 may have an average particle diameter (D50) of about 8 μm.

The second primary particles NNP_2 constituting the second particle PTC2 may have an average size of about 3 μm or less. For example, the second primary particles NNP_2 may have an average size of about 300 nm to about 3 μm, about 0.5 μm to about 3 μm, about 1 μm to about 3 μm, or about 2 μm to about 3 μm. In one or more embodiments, the size of the second primary particles may be or indicate a diameter measured by randomly selecting about 30 primary particles from an electron micrograph of a positive electrode active material. The second primary particles NNP_2 may be substantially uniform in size. The second primary particles NNP_2 may have a greater average size than the first primary particles SP1. A difference in average size between the second primary particles NNP_2 and the first primary particles SP1 may be about 300 nm or greater.

In one or more embodiments, the second particle PTC2 may include a second coating layer on a surface thereof. The second particle PTC2 may include the second coating layer, and may thus effectively prevent or reduce structural collapse caused by repeated charging/discharging.

The second coating layer may include an aluminium-containing compound, a magnesium-containing compound, and/or a (e.g., any suitable) combination thereof. Metal-containing compounds in the second coating layer may be, for example, metal oxides, metal hydroxides, metal carbonates, composites thereof, or mixtures thereof. The metal-containing compounds may further include other metals or non-metallic elements. For example, the second coating layer may further include lithium, manganese, and/or nickel.

A method of measuring the metal content (e.g., amount) in the second coating layer of the second particle PTC2 may include performing scanning electron microscopy and energy dispersive X-ray spectroscopy (SEM-EDS) on the second particle PTC2. Through the analysis described herein, the content (e.g., amount) of aluminium and/or magnesium in the second coating layer may be determined. In some embodiments, methods of measuring the metal content (e.g., amount) in the second coating layer may include inductively coupled plasma-mass spectrometry (ICP-MS), inductively coupled plasma optical emission spectroscopy (ICP-OES), and/or the like.

The first positive electrode active material layer ATL1 includes a first particle and a second particle. In the first positive electrode active material layer ATL1, the second particle PTC2 may be less than the first particle PTC1 in weight, e.g., a weight of the first particle is greater than a weight of than the second particle.

The first particle PTC1 and the second particle PTC2 constituting the first positive electrode active material layer ATL1 include manganese (Mn).

The second particle PTC2 has a high content (e.g., amount) of manganese (Mn), and may thus improve the operating voltage of a rechargeable battery compared to the first particle PTC1. In some embodiments, the second particle PTC2 has a spinel structure, and may thus have a stable crystal structure and excellent or suitable lifetime characteristics compared to the first particle PTC1. The second particle PTC2 may have low resistance. Here, in one or more embodiments, the second particle PTC2, which includes manganese oxide, may not be usable alone due to low capacity and energy density.

The positive electrode active material layer according to the present embodiment has the first particle PTC1 and the second particle PTC2 mixed in an appropriate or suitable ratio (that is, the manganese (Mn) content (e.g., amount) is regulated), and may thus have improved voltage and lifetime characteristics compared to batteries containing general lithium iron phosphate-based compounds or lithium manganese iron phosphate-based compounds. A battery having long service life may be obtainable by mixing the first particle PTC1 and the second particle PTC2 in an appropriate or suitable range or ratio. The battery also has improved energy density, and may thus have excellent or suitable performance for commercial use.

The positive electrode active material layer according to the present embodiment has the first particle PTC1 and the second particle PTC2 mixed in an appropriate or suitable ratio, and may thus allow an electrode plate to be easily prepared. For example, compared to preparing a positive electrode active material layer containing general lithium iron phosphate compounds, the second particle PTC2 having a greater average particle diameter may be further included, and accordingly, the electrode plate may have increased bindability. Accordingly, an amount of binder may be reduced (e.g., less required) in the preparation of an electrode plate compared to preparing a positive electrode active material layer containing the first particle PTC1 in the form of a single particle, and having a very small average particle diameter. The first positive electrode active material layer ATL1 including the second particle PTC2 having low resistance is formed first, and accordingly, the electrode plate may have improved (e.g., reduced) electrical resistance characteristics.

**Second Positive Electrode Active Material Layer ATL2**

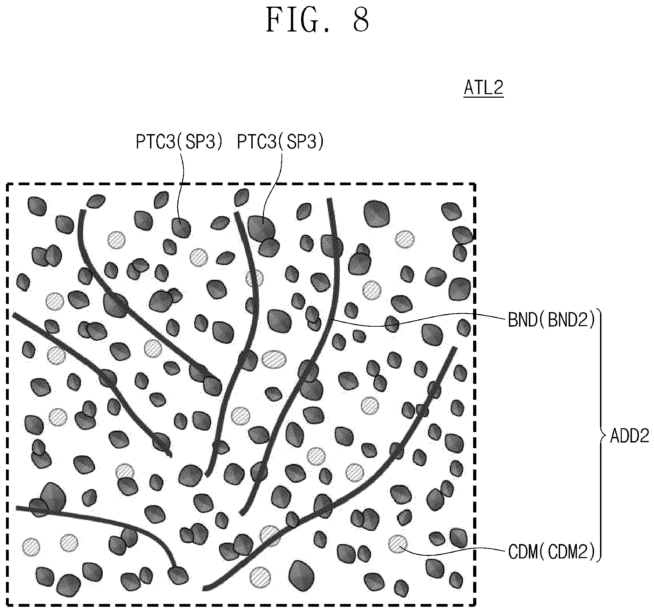

FIG. 8 is an enlarged view showing a second positive electrode active material layer of a positive electrode for a rechargeable lithium battery according to one or more embodiments of the present disclosure.

Referring to FIG. 8, the second positive electrode active material layer ATL2 may include a third particle PTC3 and a second functional additive ADD2 (BND2 and CDM2). The second functional additive ADD2 may include a second binder BND2 and a second conductive material CDM2.

The second binder BND2 may combine the third particle PTC3 and the second conductive material CDM2. In some embodiments, the second binder BND2 may stably fix the second positive electrode active material layer ATL2 onto the first positive electrode active material layer ATL1. In one or more embodiments, the second binder BND2 may include at least one (e.g., one or more) selected from among the group consisting of polyvinyl alcohol, carboxymethyl cellulose, hydroxypropyl cellulose, diacetyl cellulose, polyvinyl chloride, carboxylated polyvinyl chloride, polyvinyl fluoride, an ethylene oxide-containing polymer, polyvinyl pyrrolidone, polyurethane, polytetrafluoroethylene, polyvinylidene fluoride, polyethylene, polypropylene, a styrene-butadiene rubber, a (meth)acrylated styrene-butadiene rubber, an epoxy resin, a (meth)acrylic resin, a polyester resin, and nylon, but the present disclosure is not limited thereto.

The second conductive material CDM2 may be used to improve conductivity of the second positive electrode active material layer ATL2. Any conductive material that does not cause chemical changes in the second positive electrode active material layer ATL2 may be used as the second conductive material CDM2 without limitation. In one or more embodiments, the second conductive material CDM2 may include a carbon-based material such as natural graphite, artificial graphite, carbon black, acetylene black, ketjen black, a carbon fiber, a carbon nanofiber, and a carbon nanotube; a metal-based material including copper, nickel, aluminium, silver, and/or the like in a form of a metal powder or a metal fiber; a conductive polymer such as a polyphenylene derivative; and/or a (e.g., any suitable) mixture (e.g., combination) thereof.

**Third Particle PTC3**

The third particle PTC3 includes an olivine-based lithium compound represented by Formula 3.

$$\text{Formula 3} \qquad Li_{a3}Mn_{z3}Fe_{x3}B3_{y3}PO_{4-c3}$$

In Formula 3, $0.8 < a3 \leq 1.2$, $0.4 \leq z3 \leq 0.8$, $0 \leq x3 \leq 0.6$ (e.g. $0.2 \leq x3 \leq 0.6$), $0 \leq y3 \leq 0.05$ (e.g. $0.001 \leq y3 \leq 0.05$), and $0 \leq c3 \leq 0.05$ (e.g. $0 < c3 \leq 0.05$) are satisfied. B3 is at least one (e.g., one or more) element selected from among the group consisting of Al, Ti, V, and Mg. B3 may be a dopant with which the third particle PTC3 is doped. For example, B3 may include Ti.

The third particle PTC3 may further include carbon derived from the positive electrode active material layer AML1 described herein. The third particle PTC3 (e.g. in the form of a single particle) may have a carbon element content (e.g., amount) of about 0.5 wt% to about 5 wt%, about 0.5 wt% to about 3 wt%, or about 0.5 wt% to about 2 wt%.

The third particle PTC3 may be in the form of a single particle. For example, the third particle PTC3 may be a single particle including at least one primary particle or several primary particles. Herein, the single particle may be or indicate a single type or kind of particle having no grain boundary inside thereof. The single particle may be or indicate one single particle morphologically present in an independent phase in which particles are not aggregated (e.g., not agglomerated) with one another, a particle having a monolith structure, a particle having a one-body structure, or a non-aggregated (e.g., non-agglomerated) particle. For example, the single particle may be a single crystal. In one or more embodiments, the single particle may be a particle containing several crystals. The single particle may be in an isolated form. In one or more embodiments, the single particle may be in the form in which about 2 to about 100 third primary particles SP3 are attached to one another.

The third particle PTC3 may be a nanomorphous positive electrode active material. The third particle PTC3 may include at least one (e.g., one or more) third primary particle SP3. In one or more embodiments, the third particle PTC3 may be in the shape of sphere or oval in which third primary particles are aggregated (e.g., agglomerated). In one or more embodiments, the third particle PTC3 may not have a spherical shape but have an irregular shape even if (e.g., when) the third primary particles SP3 agglomerate.

In one or more embodiments, the average particle diameter may indicate a particle diameter (D50) if (e.g., when) a cumulative volume is about 50 volume% in a particle size distribution. In one or more embodiments, the average particle diameter (D50) of the third particle PTC3 may be a value measured using a particle size analyzer.

In one or more embodiments, the third particle PTC3 may have an average particle diameter of about 500 nm to about 2.5 $\mu$m, or about 1 $\mu$m. The size of at least one (e.g., one or more) third primary particle SP3 constituting the third particle PTC3 may be measured using a scanning electron microscope (SEM). In one or more embodiments, the size of the third primary particle SP3 may indicate a diameter measured by randomly selecting about 30 third primary particles SP3 from an electron micrograph of a positive electrode active material. The third primary particles SP3 may be substantially uniform in size. The third primary particle SP3 may have a size of about 100 nm to about 500 nm, or about 100 nm to about 200 nm.

The third particle PTC3 may be in the form of a polycrystal and may include secondary particles in which at least two of the third primary particles SP3 are aggregated (e.g., agglomerated). For example, one third particle PTC3 may include a plurality of third primary particles SP3 aggregated (e.g., agglomerated) together. The third particle PTC3 composed of the plurality of third primary particles SP3 may be in the shape of sphere or oval.

In one or more embodiments, the average particle diameter may indicate a particle diameter (D50) if (e.g., when) a cumulative volume is about 50 volume% in a particle size distribution. In one or more embodiments, the average particle diameter (D50) of the third particle PTC3 may be a value measured using a particle size analyzer.

The third particle PTC3 including at least one (e.g., one or more) third primary particle SP3 may have an average particle diameter of about 50 nm to about 5 $\mu$m, about 100 nm to about 3 $\mu$m, about 500 nm to about 2.5 $\mu$m, about 3 $\mu$m to about 7 $\mu$m, about 4 $\mu$m to about 6 $\mu$m, or about 5 $\mu$m. The average particle diameter (D50) of the third particle PTC3 may be smaller than the average particle diameter (D50) of the second particle PTC2 described herein.

The third particle PTC3 may include at least one (e.g., one or more) primary particle (or single particle). The size of at least one (e.g., one or more) third primary particle SP3 constituting the third particle PTC3 may be measured using a scanning electron microscope (SEM). In one or more embodiments, the size of the third primary particle SP3 may indicate a diameter measured by randomly selecting about 30 third primary particles SP3 from an electron micrograph of a positive electrode active material. The third primary particles SP3 may be substantially uniform in size.

At least one (e.g., one or more) third primary particle SP3 constituting the third particle PTC3 may have a size of about 100 nm to about 200 nm, about 50 nm to about 150 nm, about 50 nm to about 100 nm, about 100 nm to about 150 nm, or about 200 nm to about 300 nm.

In one or more embodiments, the third particle PTC3 may include a coating layer on a surface thereof. The coating layer may be entirely around (e.g., cover entirely) the surface of the third particle PTC3, or may be partially around (e.g., cover partially) the surface of the third particle PTC3. For example, the coating layer may include carbon and/or a carbon-containing compound. The coating layer may further include at least one (e.g., one or more) selected from among the group consisting of a titanium-containing compound, a magnesium-containing compound, and a vanadium-containing compound. Metal-containing compounds, such as titanium-containing compounds, magnesium-containing compounds, and vanadium-containing compounds, may be, for example, metal oxides, metal hydroxides, metal carbonates, composites thereof, or mixtures thereof. The metal-containing compounds may further include other metals or non-metallic elements. For example, the metal-containing compounds may further include lithium. The third particle PTC3 may have improved structural stability and electrical conductivity through the coating layer.

In one or more embodiments, the third particle PTC3 may further include a grain boundary coating layer on a surface of each of the third primary particles SP3. The grain boundary coating layer may be present inside the third particle PTC3. The grain boundary coating layer may be formed to be applied along an interface between the third primary particles SP3 inside the third particle PTC3. For example, the grain boundary coating layer may indicate a material applied onto a grain boundary inside the third particle PTC3.

The grain boundary coating layer may include carbon and/or a carbon-containing compound. The grain boundary coating layer may further include at least one (e.g., one or more) selected from among the group consisting of a titanium-containing compound, a magnesium-containing compound, and a vanadium-containing compound.

The interior (e.g., inside) of the third particle PTC3 described herein may be or indicate the entire interior (e.g., inside) portion of the third particle PTC3 excluding the surface of the third particle PTC3. For example, the interior (e.g., inside) of the third particle PTC3 may be or indicate a region of the entire inside from about 10 nm in depth, or from about 10 nm to about 2 $\mu$m in depth, with respect to the surface of the third particle PTC3.

The third particle PTC3 may further include a grain boundary coating portion, and may thus have greater structural stability and have a substantially uniform coating layer formed on the surface thereof. In some embodiments, the third particle PTC3 may further include a grain boundary coating portion, and may thus have further improved electrical conductivity.

The third particle PTC3 may further include carbon derived from the coating layer and/or the grain boundary coating layer described herein. The third particle PTC3 (e.g. in the form of a secondary particle) may have a carbon element content (e.g., amount) of about 0.5 wt% to about 10 wt%, about 1 wt% to about 3 wt%, or about 1.5 wt% to about 2.5 wt%. For example, the third particle PTC3 may have a greater content (e.g., amount) of carbon if (e.g., when) in the form of a secondary particle than in the form of a single particle.

The third particle PTC3 may be in the shape of sphere in which a plurality of third primary particles SP3 are aggregated (e.g., agglomerated). The third particle PTC3 may have the third primary particles SP3 closely aggregated (e.g., agglomerated), and may thus exhibit the following characteristics. The third particle PTC3 may retain (e.g., adhere to or keep) the coating layer and/or the grain boundary coating layer described herein well, and may thus have greater electrical conductivity and improved low-temperature characteristics. Due to the increased bindability of an electrode plate, binder capacity may be reduced. The third particle PTC3 may be in the shape of sphere or oval.

The third particle PTC3 may have a porosity of about 20% to about 40%. A Span value of the third particle PTC3, analyzed through a particle size analyzer, may be about 0.3 to about 0.75.

Hereinafter, the positive electrode active material layer AML1 according to one or more embodiments of the present disclosure will be described in more detail.

The positive electrode or positive electrode active material layer AML1 includes manganese (Mn). A total doping content (e.g., amount) of manganese (Mn) may be defined as the sum of a doping content (e.g., amount) M1 of manganese (Mn) included (e.g., contained) in the first positive electrode active material layer ATL1 and a doping content (e.g., amount) M2 of manganese (Mn) included (e.g., contained) in the second positive electrode active material layer ATL2. The doping content (e.g., amount) M1 of manganese (Mn) included (e.g., contained) in the first positive electrode active material layer ATL1 may be defined as the sum of a product of the manganese (Mn) doping content (e.g., amount) ($z_1$ in Formula 1 described herein) in the first particle PTC1 and a weight ratio of the first particle PTC1, and a product of the manganese (Mn) doping content (e.g., amount) ($x_2$ in Formula 2 described herein) in the second particle PTC2 and a weight ratio of the second particle PTC2. The doping content (e.g., amount) M2 of manganese (Mn) included in the second positive electrode active material layer ATL2 may be defined as a product of the manganese (Mn) doping content (e.g., amount) ($z_3$ in Formula 3 described herein) in the third particle PTC3 and a weight ratio of the third particle PTC3.

The total doping content (e.g., amount) of manganese (Mn) in the positive electrode active material layer AML1 may be about 0.50 to about 0.90, about 0.50 to about 0.70, about 0.60 to about 0.80, about 0.60 to about 0.70, or about 0.50 to about 0.60. The total doping content can be calculated using the equation:

Total Mn doping Content = [Number of Mn atoms in the first particle ($z_1$) $\times$ Weight ratio of the first particle/Molecular weight of the first particle] + [Number of Mn atoms in the second particle ($x_2$) x Weight ratio of the second particle/Molecular weight of the second particle] + [Number of Mn atoms in the third particle ($z_3$) $\times$ Weight ratio of the third particle/Molecular weight of the third particle].

In the above equation, the weight ratio of the first particle may refer to the weight ratio of the first particle relative to the total weight of the first particle, the second particle, and the third particle.

A weight of the second particle PTC2 may be in an amount of about 5 wt% to about 20 wt%, about 10 wt% to about 20 wt%, about 15 wt% to about 30 wt%, about 20 wt% to about 30 wt%, or about 25 wt% to about 35 wt%, with respect to a total weight of the first particle PTC1, the second particle PTC2, and the third particle PTC3 in the positive electrode active material layer AML1.

The positive electrode active material layer AML1 according to one or more embodiments of the present disclosure may have a double layer structure in which the second positive electrode active material layer ATL2 is (e.g., stacked) on the first positive electrode active material layer ATL1. The positive electrode active material layer AML1 may include a functional additive ADD. The first positive electrode active material layer ATL1 may include a first functional additive ADD1, and the second positive electrode active material layer ATL2 may include a second functional additive ADD2. The functional additive ADD may indicate at least one (e.g., one or more) of the first functional additive ADD1 or the second functional additive ADD2.

The functional additive may include a conductive material CDM and a binder BND. The functional additive may be included, and accordingly, the positive electrode active material layer may have improved performance. For example, materials in a positive electrode active material layer may be well bonded, the bindability of an electrode plate may be improved, and the conductivity of a positive electrode active material layer may be improved.

The first particle PTC1 in the form of a secondary particle may have a smaller amount of the functional additive ADD used or required for an active material) than the first particle PTC1 in the form of a single particle. In some embodiments, both (e.g., simultaneously) the first particle PTC1 and the second particle PTC2 are included in the first positive electrode active material layer ATL1, and accordingly, a weight ratio of the functional additive ADD used or required for an active material layer) may be reduced.

For example, a relatively large amount of binder BND may be used or required to attach the first particle PTC1 having a small average particle diameter to the current collector COL1, but a relatively small amount of binder BND may be used or required to attach the second particle PTC2 having a large average particle diameter to the current collector COL1. A weight ratio of the binder BND used or required through the first positive electrode active material layer ATL1 including the first particle PTC1 and the second particle PTC2 may be reduced.

The positive electrode active material layer AML1 of the present disclosure includes the first positive electrode active material layer ATL1 having a relatively small amount of functional additive desired or required, and may thus improve energy density. That is, one or more embodiments of the present disclosure introduces the positive electrode active material layer, which incorporates the first active material layer ATL1. This first active material layer ATL1 contains a minimal (or substantially reduced) yet sufficient amount of functional additives, potentially thereby enhancing the energy density of the device.

If (e.g., when) the double layer structure is applied, an electrode plate may be more easily prepared. For example, the first positive electrode active material layer ATL1 in which the first particle PTC1 and the second particle PTC2 are mixed may be first (e.g., stacked) on a current collector, and the second positive electrode active material layer ATL2 may be (e.g., stacked) on the first positive electrode active material layer ATL1. If (e.g., when) the first positive electrode active material layer ATL1 having excellent or suitable bindability of an electrode plate is first (e.g., stacked) on a current collector, the binder BND may be used or required in a smaller amount, resulting in improved energy density. In particular, the first positive electrode active material layer ATL1 may be first (e.g., stacked) on a portion in contact with a current collector to improve the resistance of an electrode plate.

A weight ratio (e.g. amount) of the first binder BND1 in the first positive electrode active material layer ATL1 may be about 1.2 wt% to about 3.0 wt% (relative to the total weight of the first positive electrode active material layer ATL1).

A weight ratio (e.g. amount) of the second binder BND2 in the second positive electrode active material layer ATL2 may be about 2.0 wt% to about 5.0 wt% (relative to the total weight of the second positive electrode active material layer ATL2).

The weight ratio of the first binder BND1 in the first positive electrode active material layer ATL1 may be lower than the weight ratio of the second binder BND2 in the second positive electrode active material layer ATL2. In one or more embodiments, a ratio of the weight ratio of the second binder BND2 to the weight ratio of the first binder BND1 may be about 0.8 to about 2.6 (e.g. about 1.01 to about 2.6).

A weight ratio (e.g. amount) of the first conductive material CDM1 in the first positive electrode active material layer ATL1 may be about 1.2 wt% to about 3.0 wt% (relative to the total weight of the first positive electrode active material layer ATL1).

A weight ratio (e.g. amount) of the second conductive material CDM2 in the second positive electrode active material layer ATL2 may be about 2.0 wt% to about 5.0 wt% (relative to the total weight of the second positive electrode active material layer ATL2).

The weight ratio of the first conductive material CDM1 in the first positive electrode active material layer ATL1 may be lower than the weight ratio of the second conductive material CDM2 in the second positive electrode active material layer ATL2. In one or more embodiments, a ratio of the weight ratio of the second conductive material CDM2 to the weight ratio of the first conductive material CDM1 may be about 1.5 to about 4.

A weight ratio (e.g. amount) of the first functional additive ADD1 in the first positive electrode active material layer ATL1 may be about 2.4 wt% to about 6.0 wt% (relative to the total weight of the first positive electrode active material layer ATL1).

A weight ratio (e.g. amount) of the second functional additive ADD2 in the second positive electrode active material layer ATL2 may be about 4.0 wt% to about 10.0 wt% (relative to the total weight of the second positive electrode active material layer ATL2).

The weight ratio of the first functional additive ADD1 in the first positive electrode active material layer ATL1 may be less or lower than the weight ratio of the second functional additive ADD2 in the second positive electrode active material layer ATL2.

In one or more embodiments, a ratio of the weight ratio of the second functional additive (e.g., ADD2 in the second positive electrode active material layer ATL2) to the weight ratio of the first functional additive (e.g., ADD1 in the first positive electrode active material layer ATL1) may be about 1.0 to about 2.0, about 1.01 to about 2.0, about 1.5 to about 2.5, or about 1.5 to about 3.0.

The first positive electrode active material layer ATL1 may have a first thickness. In one or more embodiments, the first thickness may increase with a rise in weight of the first particle PTC1 and the second particle PTC2 included in the first positive electrode active material layer ATL1. The second positive electrode active material layer ATL2 may have a second thickness. In one or more embodiments, the second thickness may increase with a rise in weight of the third particle PTC3 included in the second positive electrode active material layer ATL2. In one or more embodiments, a ratio of the second thickness to the first thickness may be about 0.4 to about 2.0, about 0.8 to about 1.5, about 0.9 to about 1.2, or about 1. Within the ranges described herein, stability and lifetime characteristics may be improved while excellent or suitable high voltage performance and energy density are maintained.

In one or more embodiments, the positive electrode active material layer AML1 of the present disclosure may have a compressed density of about 2.0 gram per cubic centimeter (g/cc) to about 2.5 g/cc.

In one or more embodiments, the first positive electrode active material layer ATL1 may have a loading level of about 5 milligram per square centimeter ($mg/cm^2$) to about 10 $mg/cm^2$. The second positive electrode active material layer ATL2 may have a loading level of about 5 $mg/cm^2$ to about 25 $mg/cm^2$.

A rechargeable lithium battery including the positive electrode active material of the present disclosure may have improved low-temperature characteristics. In one or more embodiments, capacity at -20 °C relative to initial capacity (capacity at -20 °C/initial capacity) of the rechargeable lithium battery may be about 40% or greater. For example, capacity at -20 °C relative to initial capacity (capacity at -20 °C/initial capacity) of the rechargeable lithium battery of the present disclosure may be about 40% to about 100%, about 50% to about 100%, or about 96% to about 99%.

A rechargeable lithium battery including the positive electrode active material of the present disclosure may have improved operating voltage. In one or more embodiments, the rechargeable lithium battery of the present disclosure may have an operating voltage range of about 3V to about 5V. For example, the operating voltage range may be about 3 V to about 4.5 V, or about 3.5 V to about 4 V.

A rechargeable lithium battery including the positive electrode active material of the present disclosure may have improved lifetime characteristics. In one or more embodiments, the rechargeable lithium battery of the present disclosure may have a capacity retention of about 98% or greater after 50 times of charging/discharging at a constant current of 0.1 C at the voltage described herein. For example, the capacity retention may be about 98% to about 100%, or about 99.8% to about 100%.

Terms such as "substantially," "about," and "approximately" are used as relative terms and not as terms of degree, and are intended to account for the inherent deviations in measured or calculated values that would be recognized by those of ordinary skill in the art. They may be inclusive of the stated value and an acceptable range of deviation as determined by one of ordinary skill in the art, considering the limitations and error associated with measurement of that quantity. For example, "about" may refer to one or more standard deviations, or $\pm$ 30%, 20%, 10%, 5% of the stated value.

Numerical ranges disclosed herein include and are intended to disclose all subsumed sub-ranges of the same numerical precision. For example, a range of "1.0 to 10.0" includes all subranges having a minimum value equal to or greater than 1.0 and a maximum value equal to or less than 10.0, such as, for example, 2.4 to 7.6.

### Method for Preparing Positive Electrode Active Material

Hereinafter, Preparation Examples, Examples, and Comparative Examples of the present disclosure will be described. However, the following Examples are presented only as one or more embodiments of the present disclosure, and the present disclosure is not limited by the following Examples.

### EXAMPLES

### Preparation Example 1: Preparation of First Particle PTC1 in the form of Single Particle

A manganese iron phosphate precursor ($Mn_{0.6}Fe_{0.4}PO_4$), lithium carbonate, and titanium dioxide were mixed at a molar ratio of 1:1.03:0.004, and 10 wt% of glucose was added to the mixture. The mixture was subjected to a wet grinding process through ball milling. The mixture was evaporated to dryness on a heating tray and then placed and dried in a vacuum oven at 120 °C for 4 hours. The dried mixture was fired at 750 °C for 10 hours in a nitrogen atmosphere. The fired product was ground to obtain a first particle in the form of a single particle. The first particle had an average size of about 100 nanometer (nm) to about 200 nm.

### Preparation Example 2: Preparation of Second Particle PTC2 in the form of Secondary Particle

0.170 g of $MnSO_4H_2O$ and 0.228 g of $(NH_4)_2S_2\text{-}O_8$ were dissolved in 100 mL of distilled water, sulfuric acid was added thereto to adjust the pH to 1, and the mixture was subjected to a reaction at 130 °C for 10 hours to obtain a solid precipitate. The obtained precipitate was washed with distilled water several times and dried at 300 °C for 3 hours to obtain $MnO_2$ having an average particle diameter of 5 micrometers ($\mu$m) as a solid.

$Li_2CO_3$ and synthesized $MnO_2$ were mixed such that Li and Mn were at a molar ratio of 1:2, and the mixture was heated at 600 °C for 10 hours to synthesize $LiMn_2O_4$ particles having an average particle diameter of 7 $\mu$m and an average primary particle size of 0.5 $\mu$m to 2.5 $\mu$m.

### Preparation Example 3: Preparation of Third Particle PTC3 in the form of Single Particle

A manganese iron phosphate precursor ($Mn_{0.6}Fe_{0.4}PO_4$), lithium carbonate, and titanium dioxide were mixed at a molar ratio of 1:1.03:0.004, and 10 wt% of glucose was added to the mixture. The mixture was subjected to a wet grinding process through ball milling. The mixture was evaporated to dryness on a heating tray and then placed and dried in a vacuum oven at 120 °C for 4 hours. The dried mixture was fired at 750 °C for 10 hours in a nitrogen atmosphere. The fired product was ground to obtain a third particle in the form of a single particle. The third particle had an average size of about 100 nm to about 200 nm.

### Preparation of Single Layer Electrode Plate

### Comparative Example 1-1

The first particle of Preparation Example 1 and the second particle of Preparation Example 2 were mixed at a weight ratio of 30:70 and dispersed in N-methylpyrrolidone along with a conductive material (carbon black) and a binder (polyvinylidene fluoride) to prepare a positive electrode active material slurry. The positive electrode active material slurry was applied onto a positive electrode current collector and dried to prepare a single layer electrode plate. The total Mn doping content for Comparative Example 1-1 was calculated as follows.

Given that the molecular weights of the first particle and the second particle are approximately 157.21 and 180, respectively, and the numbers of Mn atoms per mole of the first particle and the second particle are 0.6 and 2, respectively, the Mn doping content amount can be calculated using the following equation (described earlier in this specification):

Total Mn doping content = [(30 x 0.6) / 157.21] + ([70 x 2) / 180] = 0.1145 + 0.7778 = 0.8923 (which can be rounded to 0.9).

### Comparative Example 1-2

Except that the first particle of Preparation Example 1 and the second particle of Preparation Example 2 were mixed at a weight ratio of 42:58, a positive electrode active material slurry and a single layer electrode plate were prepared in substantially the same manner as in Comparative Example 1-1.

### Comparative Example 1-3

Except that the first particle of Preparation Example 1 and the second particle of Preparation Example 2 were mixed at a weight ratio of 56:44, a positive electrode active material slurry and a single layer electrode plate were prepared in substantially the same manner as in Comparative Example 1-1.

### Comparative Example 1-4

Except that the first particle of Preparation Example 1 and the second particle of Preparation Example 2 were mixed at a weight ratio of 70:30, a positive electrode active material slurry and a single layer electrode plate were prepared in substantially the same manner as in Comparative Example 1-1.

### Comparative Example 1-5

Except that the first particle of Preparation Example 1 and the second particle of Preparation Example 2 were mixed at a weight ratio of 83:17, a positive electrode active material slurry and a single layer electrode plate were prepared in substantially the same manner as in Comparative Example 1-1.

### Comparative Example 1-6

Except that the first particle of Preparation Example 1 and the second particle of Preparation Example 2 were mixed at a weight ratio of 95:5, a positive electrode active material slurry and a single layer electrode plate were prepared in substantially the same manner as in Comparative Example 1-1.

### Preparation of Double Layer Electrode Plate

### Example 1-1

The first particle of Preparation Example 1 and the second particle of Preparation Example 2 were dispersed in N-methylpyrrolidone along with a conductive material (carbon black) and a binder (polyvinylidene fluoride) to prepare a first positive electrode active material slurry. The third particle of Preparation Example 3 was dispersed in N-methylpyrrolidone along with a conductive material (carbon black) and a binder (polyvinylidene fluoride) to prepare a second positive electrode active material slurry.

The first positive electrode active material slurry was applied onto a positive electrode current collector and dried to form a first positive electrode active material layer. The second positive electrode active material slurry was applied onto the first positive electrode active material layer and dried to form a second positive electrode active material layer.

In this case, an active material layer was formed such that the first particle, the second particle, and the third particle in the double layer positive electrode were present at a weight ratio of 41.5:17:41.5. Through a roll press, a positive electrode in which the current collector, the first positive electrode active material layer, and the second positive electrode active material layer were stacked in this order was prepared.

### Example 1-2

The first particle of Preparation Example 1 and the second particle of Preparation Example 2 were dispersed in N-methylpyrrolidone along with a conductive material (carbon black) and a binder (polyvinylidene fluoride) to prepare a first positive electrode active material slurry. The third particle of Preparation Example 3 was dispersed in N-methylpyrrolidone along with a conductive material (carbon black) and a binder (polyvinylidene fluoride) to prepare a second positive electrode active material slurry.

The first positive electrode active material slurry was applied onto a positive electrode current collector and dried to form a first positive electrode active material layer. The second positive electrode active material slurry was applied onto the first positive electrode active material layer and dried to form a second positive electrode active material layer.

In this case, an active material layer was formed such that the first particle, the second particle, and the third particle in the double layer positive electrode were present at a weight ratio of 35:30:35. Through a roll press, a positive electrode in which the current collector, the first positive electrode active material layer, and the second positive electrode active material layer were stacked in this order was prepared.

## Comparative Example 2-1

The first particle of Preparation Example 1 and the second particle of Preparation Example 2 were dispersed in N-methylpyrrolidone along with a conductive material (carbon black) and a binder (polyvinylidene fluoride) to prepare a first positive electrode active material slurry. The third particle of Preparation Example 3 was dispersed in N-methylpyrrolidone along with a conductive material (carbon black) and a binder (polyvinylidene fluoride) to prepare a second positive electrode active material slurry.

Unlike Example 1-1, the second positive electrode active material slurry was first applied onto a positive electrode current collector and dried to form a first positive electrode active material layer. Thereafter, the first positive electrode active material slurry was applied onto the first positive electrode active material layer and dried to form a second positive electrode active material layer.

In this case, an active material layer was formed such that the first particle, the second particle, and the third particle in the double layer positive electrode were present at a weight ratio of 41.5:17:41.5. Through a roll press, a positive electrode in which the current collector, the first positive electrode active material layer, and the second positive electrode active material layer were stacked in this order was prepared.

## Comparative Example 2-2

The first particle of Preparation Example 1 and the second particle of Preparation Example 2 were dispersed in N-methylpyrrolidone along with a conductive material (carbon black) and a binder (polyvinylidene fluoride) to prepare a first positive electrode active material slurry. The third particle of Preparation Example 3 was dispersed in N-methylpyrrolidone along with a conductive material (carbon black) and a binder (polyvinylidene fluoride) to prepare a second positive electrode active material slurry.

Unlike Example 1-2, the second positive electrode active material slurry was first applied onto a positive electrode current collector and dried to form a first positive electrode active material layer. Thereafter, the first positive electrode active material slurry was applied onto the first positive electrode active material layer and dried to form a second positive electrode active material layer.

In this case, an active material layer was formed such that the first particle, the second particle, and the third particle in the double layer positive electrode were present at a weight ratio of 35:30:35. Through a roll press, a positive electrode in which the current collector, the first positive electrode active material layer, and the second positive electrode active material layer were stacked in this order was prepared.

## Preparation of Negative Electrode

Graphite, a binder, and a conductive material were mixed in an N-methylpyrrolidone solvent to prepare a negative electrode active material slurry. The negative electrode active material slurry was applied onto a copper current collector, dried, and rolled to prepare a negative electrode.

## Preparation of Rechargeable Lithium Battery

A coin half-cell was prepared using the prepared positive electrode and negative electrode. A polypropylene film (Celgard 3510) was used as a separator. As an electrolyte, an electrolyte solution obtained by mixing 1.3 M $LiPF_6$ with a mixed solvent of ethylene carbonate (EC), diethyl carbonate (DEC), and fluoroethylene carbonate (FEC) (volume ratio: 2:6:2) was used.

## Evaluation Example 1: Analysis of Positive Electrode Active Material Surface

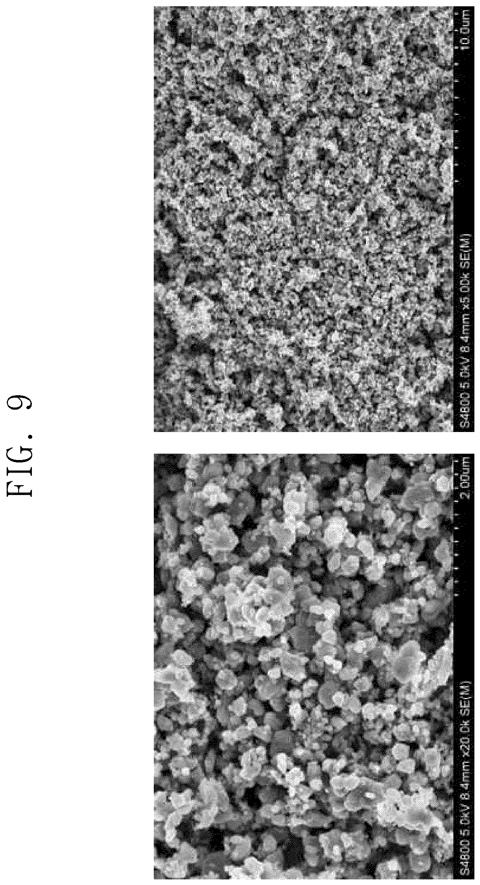

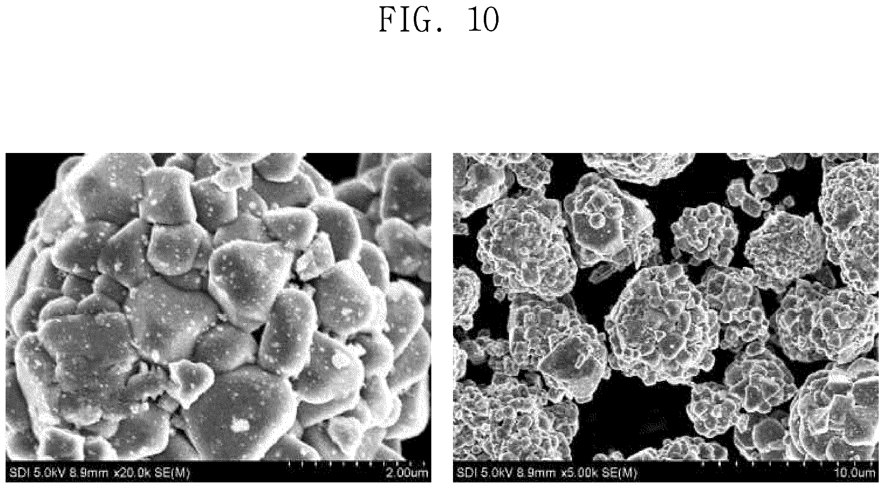

An scanning electron microscopy (SEM) image of the first particle prepared in Preparation Example 1 is shown in FIG. 9. An SEM image of the second particle prepared in Preparation Example 2 is shown in FIG. 10. Referring to FIG. 9, it is seen that the first particle according to one or more embodiments of the present disclosure is in the form of a single particles in which nano-sized fine primary particles are present individually or several primary particles are randomly aggregated (e.g., agglomerated). Referring to FIG. 10, it is seen that the second particle according to one or more embodiments of the present disclosure is in the form of a secondary particle in which a plurality of primary particles are aggregated (e.g., agglomerated). Compared to the first particle, the second particle takes a variety of forms and has large primary particles.

**Evaluation Example 2: Analysis of Positive Electrode Properties**

Pellet density (PD) in gram per cubic centimeter (g/cc) and energy density (ED) in watt-hour per kilogram (Wh/kg) of the positive electrode active material layers prepared through Examples 1-1 and 1-2 and Comparative Examples 1-1 to 2-2 were measured, and the results are shown in Table 1, abbreviated as "Ex 1-1," "Ex 1-2," and "CE 1-1" to "CE 2-2".

Table 1

|  | Electrode plate structure | Powder | | | | | |
|---|---|---|---|---|---|---|---|
|  |  | First particle | Second particle | Third particle | Mn amount | PD (g/cc) | ED (Wh/kg) |
| CE 1-1 | Single layer | 30% | 70% | - | 0.90 | 2.60 | 442 |
| CE 1-2 | Single layer | 42% | 58% | - | 0.80 | 2.57 | 455 |
| CE 1-3 | Single layer | 56% | 44% | - | 0.70 | 2.52 | 469 |
| CE 1-4 | Single layer | 70% | 30% | - | 0.60 | 2.43 | 483 |
| CE 1-5 | Single layer | 83% | 17% | - | 0.50 | 2.40 | 495 |
| CE 1-6 | Single layer | 95% | 5% | - | 0.40 | 2.25 | 506 |
| CE 2-1 | Double layer | 41.5% | 17% | 41.5% | 0.50 | 2.41 | 486 |
| CE 2-2 | Double layer | 35% | 30% | 35% | 0.60 | 2.41 | 478 |
| Ex 1-1 | Double layer | 41.5% | 17% | 41.5% | 0.50 | 2.42 | 497 |
| Ex 1-2 | Double layer | 35% | 30% | 35% | 0.60 | 2.42 | 486 |

Referring to Table 1, it is seen that the positive electrode active material layers according to Examples 1-1 and 1-2 each have higher energy density than Comparative Examples 1-1 to 1-4. In some embodiments, even when compared to Comparative Example 1-4 or Comparative Example 1-5, each having a single layer structure, the positive electrode active material layers according to Examples 1-1 and 1-2 are each capable of keeping the pellet density and the energy density at similar levels. Here, it is determined that the positive electrode active material layers according to Examples herein each have a high energy density of 485 Wh/kg or greater, indicating that the positive electrode active material layers have an energy density suitable for commercial use.

**Evaluation Example 3: Evaluation of Battery Properties**

Properties of rechargeable lithium batteries prepared using the positive electrodes of Examples 1-1 and 1-2 and Comparative Examples 1-1 to 2-2 were evaluated.
For initial charging/discharging, the rechargeable lithium batteries were initially charged at a constant current of 0.2 C and a constant voltage of 4.25 V, and after 10 minutes of rest, discharged up to 2.5 V at a constant current of 0.2 C. Thereafter, the charging/discharging was repeated 50 times at 45 °C and 1.0 C/1.0 C. In some embodiments, a coin cell was additionally prepared and measured at -20 °C for a capacity of 0.2 C. The results of evaluating the battery properties are shown in Table 2, abbreviated as "Ex 1-1," "Ex 1-2," and "CE 1-1" to "CE 2-2".

Table 2

|  | 0.2 C charge amount (mAh/g) | 0.2 C discharge amount (mAh/g) | 0.2 C efficiency | -20 capacity (mAh/g) | Average voltage (V) | 1 C lifetime (%,@50cy) | DCIR, SOC50 ($\Omega$,0.2 C/1.0 C) |
|---|---|---|---|---|---|---|---|
| CE1-1 | 124.9 | 120.4 | 96.4% | 60 | 3.87 | 98.6 | 22.0 |

(continued)

|  | 0.2 C charge amount (mAh/g) | 0.2 C discharge amount (mAh/g) | 0.2 C efficiency | -20 capacity (mAh/g) | Average voltage (V) | 1 C lifetime (%,@50cy) | DCIR, SOC50 ($\Omega$,0.2 C/1.0 C) |
|---|---|---|---|---|---|---|---|
| CE 1-2 | 130.1 | 124.6 | 95.8% | 65 | 3.82 | 98.1 | 25.6 |
| CE 1-3 | 136.1 | 129.5 | 95.2% | 72 | 3.77 | 97.6 | 29.8 |
| CE 1-4 | 142.1 | 134.4 | 94.6% | 78 | 3.71 | 97.3 | 34.0 |
| CE 1-5 | 147.7 | 139.0 | 94.1% | 84 | 3.66 | 96.5 | 37.9 |
| CE1-6 | 152.9 | 143.2 | 93.7% | 89 | 3.62 | 94.6 | 41.5 |
| CE 2-1 | 145.1 | 136.8 | 94.3% | 78 | 3.66 | 95.3 | 29.8 |
| CE 2-2 | 140.7 | 133.2 | 94.7% | 69 | 3.71 | 95.8 | 26.9 |
| Ex1-1 | 148.1 | 140.2 | 94.7% | 64 | 3.66 | 98.0 | 24.6 |
| Ex 1-2 | 143.0 | 135.8 | 95.0% | 84 | 3.71 | 98.6 | 22.1 |

Referring to Table 2, it is seen that the positive electrodes according to Examples 1-1 and 1-2 each had improved capacity retention after at least 50 cycles at 1 C rate, compared to the single layer positive electrodes of Comparative Examples 1-4 and 1-5.

Compared to a single layer structure containing the same active material, when a double layer structure is applied, active materials have improved bindability and stability, thereby improving battery performance. Functional additives are less desired or required in the preparation of positive electrodes, and in turn, energy density may be improved.

In some embodiments, the second particle having low resistance is included in the first positive electrode active material layer in contact with the current collector, thereby reducing the resistance of the positive electrode. It is seen that when compared to Comparative Examples 1-4 and 1-5, Examples 1-1 and 1-2 of the present disclosure have significantly reduced resistance, and even when compared to Comparative Examples 2-1 and 2-2, each having a double layer structure, Examples 1-1 and 1-2 of the present disclosure have significantly reduced resistance.

Examples 1-1 and 1-2 are positive electrodes in which the first particle, the second particle, and the third particle are appropriately or suitably mixed, and may be used as long-life positive electrodes having excellent or suitable characteristics considering average voltage, energy density, and lifetime characteristics overall.

**Evaluation Example 4: Weight ratio of Functional Additive in Active Material Layer**

Weight ratios of functional additives used or required for preparing the positive electrodes in the single layer structures of Comparative Examples 1-1 to 1-6 were measured.

The weight ratios of the functional additives in the first positive electrode active material layers and the weight ratios of the functional additives in the second positive electrode active material layers used or required for preparing the positive electrodes in the double layer structures of Comparative Examples 2-1 and 2-2 were measured.

The weight ratios of the functional additives in the first positive electrode active material layers and the weight ratios of the functional additives in the second positive electrode active material layers in the positive electrodes of Examples 1-1 and 1-2 were measured. The weight ratios of the functional additives in the active material layers are shown in Table 3, abbreviated as "Ex 1-1," "Ex 1-2," and "CE 1-1" to "CE 2-2".

Table 3

|  | Electrode plate structure | Weight ratio of functional additive in active material layer | |
|---|---|---|---|
|  |  | Positive electrode active material layer AML1 | |
|  |  | First positive electrode active material layer ATL1 | Second positive electrode active material layer ATL2 |
| CE 1-1 | Single layer | 4.0 wt% | |
| CE 1-2 | Single layer | 4.0 wt% | |
| CE 1-3 | Single layer | 4.0 wt% | |

(continued)

| | Electrode plate structure | Weight ratio of functional additive in active material layer | |
|---|---|---|---|
| | | Positive electrode active material layer AML1 | |
| | | First positive electrode active material layer ATL1 | Second positive electrode active material layer ATL2 |
| CE 1-4 | Single layer | 4.0 wt% | |
| CE 1-5 | Single layer | 4.0 wt% | |
| CE 1-6 | Single layer | 4.0 wt% | |
| CE 2-1 | Double layer | 6.0 wt% | 2.4 wt% |
| CE 2-2 | Double layer | 6.0 wt% | 2.4 wt% |
| Ex 1-1 | Double layer | 2.4 wt% | 6.0 wt% |
| Ex 1-2 | Double layer | 2.4 wt% | 6.0 wt% |

According to Examples 1-1 and 1-2 of the present disclosure, the weight ratio in the first positive electrode active material layer may be lower than the weight ratio in the second positive electrode active material layer.

Unlike Examples 1-1 and 1-2 of the present disclosure, in Comparative Examples 2-1 and 2-2, the active materials forming the first positive electrode active material layer and the active materials forming the second positive electrode active material layer were formed in reverse (i.e., with an opposite configuration). In this case, it is seen that functional additives are used or required in large quantities (e.g., 6.0 wt%) to form the first positive electrode active material layer on the current collector.

The functional additive may be used or required in lower amounts to stack the first positive electrode active material layer on the current collector, and in turn, preparing an electrode plate may be facilitated by first forming the first positive electrode active material layer in combination with the first positive electrode active material slurry, which is easy to prepare the positive electrode.

When compared with Comparative Examples 1-4 and 1-5 each with a single layer structure having the same proportion of a positive electrode active material as Examples 1-1 and 1-2 according to the present disclosure, it is seen that a total amount of functional additives is less in Examples 1-1 and 1-2 according to the present disclosure.

For example, Comparative Example 1-4 requires functional additives in an amount of 4.0 wt% with respect to the positive electrode active material layer, which refers to 4.0 parts by weight with respect to 100 parts by weight of the positive electrode active material layer.

Example 1-2 requires the first functional additive in an amount of 2.4 wt% with respect to the first positive electrode active material layer, and the second functional additive in an amount of 6.0 wt% with respect to the second positive electrode active material layer.

With respect to 100 parts by weight of the positive electrode active material layer, the first positive electrode active material layer is in an amount of 70 parts by weight and the second positive electrode active material layer is in an amount of 30 parts by weight, and thus the first functional additive is in an amount of 1.68 parts by weight (=70 x 0.024) and the second functional additive is in an amount of 1.8 parts by weight (=30 x 0.06), and accordingly, the functional additives are in an amount of 3.48 parts by weight with respect to 100 parts by weight of the positive electrode active material layer.

As described herein, when compared to a single layer structure, the amount of functional additives with respect to 100 parts by weight of the active material layer is reduced, and accordingly, the active material layer may have improved energy density. In some embodiments, the entire positive electrode may have reduced resistance values by forming the first positive electrode active material layer in contact with a current collector, with an active material having low resistance.

A positive electrode according to the present disclosure includes a first positive electrode active material layer containing an olivine-based first particle having a size of hundreds of nanometers and a spinel-based second particle having a size of several micrometers, and a second positive electrode active material layer containing an olivine-based third particle having a size of hundreds of nanometers and stacked on the first active material layer, and may thus have improved pellet density, capacity, and energy density. In the positive electrode according to the present disclosure, an electrode plate may be readily prepared and have improved resistance. A rechargeable lithium battery according to the present disclosure may have relatively improved lifetime.

A battery manufacturing device, a management system (BMS) device, and/or any other relevant devices or components according to embodiments of the present disclosure described herein may be implemented utilizing any suitable hardware, firmware (e.g., an application-specific integrated circuit), software, or a combination of software, firmware, and hardware. For example, the components of the device may be formed on one integrated circuit (IC) chip or on separate IC chips. Further, the components of the device may be implemented on a flexible printed circuit film, a tape carrier package (TCP), a printed circuit board (PCB), or formed on one substrate. Further, the components of the device may be a process or thread, running on one or more processors, in one or more computing devices, executing computer program instructions and interacting with other system components for performing the functionalities described herein. The computer program instructions are stored in a memory which may be implemented in a computing device using a standard memory device, such as, for example, a random access memory (RAM). The computer program instructions may also be stored in other non-transitory computer readable media such as, for example, a CD-ROM, flash drive, and/or the like. Also, a person of skill in the art should recognize that the functionality of computing devices may be combined or integrated into a single computing device, or the functionality of a particular computing device may be distributed across one or more other computing devices without departing from the scope of the present disclosure.

A person of ordinary skill in the art, in view of the present disclosure in its entirety, would appreciate that each suitable feature of the various embodiments of the present disclosure may be combined or combined with each other, partially or entirely, and may be technically interlocked and operated in various suitable ways, and each embodiment may be implemented independently of each other or in conjunction with each other in any suitable manner unless otherwise stated or implied.

The descriptions described herein are specific embodiments for implementing the present disclosure. The present invention will include both (e.g., simultaneously) one or more embodiments described herein and embodiments that may be easily modified or simply changed in design. In some embodiments, the present disclosure will also include technologies that may be easily modified and implemented using embodiments. Therefore, the scope of the present disclosure should not be limited to one or more embodiments described herein, but should be defined by the following claims and equivalents thereof.

## Claims

1. A positive electrode for a rechargeable lithium battery comprising:

   a current collector;
   a first positive electrode active material layer on the current collector; and
   a second positive electrode active material layer on the first positive electrode active material layer,
   wherein the first positive electrode active material layer comprises:

      a first particle comprising an olivine structured compound of Formula 1 and having a form of a single particle; and
      a second particle comprising a spinel structured compound of Formula 2,

   the second positive electrode active material layer comprises a third particle comprising an olivine structured compound of Formula 3 and having a form of a single particle, and
   the first particle has a greater weight than the second particle,

   $$\text{Formula 1} \qquad Li_{a1}Mn_{z1}Fe_{x1}B1_{y1}PO_{4-c1},$$

   wherein in Formula 1,
   B1 is at least one element selected from among the group consisting of Al, Ti, V, and Mg,

   $$0.8 < a1 \leq 1.2,$$

   $$0.4 \leq z1 \leq 0.8,\ 0.2 \leq x1 \leq 0.6,$$

   $$0 \leq y1 \leq 0.05,$$

   and

   $$0 \leq c1 \leq 0.05,$$

**Formula** 2 $\qquad$ $Li_{a2}Mn_{x2}B2y_2O_{4-c2}$,

wherein in Formula 2,
B2 is at least one element selected from among the group consisting of Al and Mg,

$$0.8 < a2 \leq 1.2,$$

$$1.9 \leq x2 \leq 2.05,$$

$$0 \leq y2 \leq 0.05,$$

and

$$0 \leq c2 \leq 0.05,$$

and

**Formula** 3 $\qquad$ $Li_{a3}Mn_{z3}Fe_{x3}B3_{y3}PO_{4-c3}$,

wherein in Formula 3,
B3 is at least one element selected from among the group consisting of Al, Ti, V, and Mg,

$$0.8 < a3 \leq 1.2,$$

$$0.4 \leq z3 \leq 0.8,$$

$$0 \leq x3 \leq 0.6,$$

$$0 \leq y3 \leq 0.05,$$

and

$$0 \leq c3 \leq 0.05.$$

2. The positive electrode as claimed in claim 1, wherein with respect to a total weight of the first particle, the second particle, and the third particle in the positive electrode,
a weight of the second particle is about 15 wt% to about 30 wt%.

3. The positive electrode as claimed in claim 1 or claim 2, wherein a thickness ratio of the second positive electrode active material layer to the first positive electrode active material layer is about 0.8 to about 1.2.

4. The positive electrode as claimed in any one of claims 1 to 3, wherein a total doping amount of manganese (Mn) in the positive electrode is about 0.50 to about 0.60.

5. The positive electrode as claimed in any one of claims 1 to 4, wherein the second particle is in a form of a secondary particle, the secondary particle being an agglomeration of a plurality of primary particles, and
the secondary particle has an average particle diameter (D50) of about 3 micrometer ($\mu$m) to about 10 $\mu$m.

6. The positive electrode as claimed in any one of claims 1 to 5, wherein the first particle is in a form of a single particle, the single particle comprising one or several primary particles,

the one or several primary particles have an average size of about 100 nm to about 200 nm, and
the single particle has an average particle diameter (D50) of about 0.5 $\mu$m to about 2.5 $\mu$m.

7. The positive electrode as claimed in any one of claims 1 to 6, wherein the third particle is in a form of a single particle, the single particle comprising one or several primary particles,

the one or several primary particles have an average size of about 100 nm to about 200 nm, and
the single particle has an average particle diameter (D50) of about 0.5 $\mu$m to about 2.5 $\mu$m.

8. The positive electrode as claimed in any one of claims 1 to 7, wherein the first particle comprises a coating layer comprising carbon, and
the first particle has a carbon amount of about 1.5 wt% to about 2.5 wt%.

9. A positive electrode for a rechargeable lithium battery comprising:

a current collector;
a first positive electrode active material layer on the current collector; and
a second positive electrode active material layer on the first positive electrode active material layer,
wherein the first positive electrode active material layer comprises:

a first particle comprising an olivine structured compound of Formula 1 and having a form of a single particle; and
a second particle comprising a spinel structured compound of Formula 2, and a first functional additive,

the second positive electrode active material layer comprises a third particle comprising an olivine structured compound of Formula 3 and having a form of a single particle, and a second functional additive,
the first functional additive and the second functional additive each comprise a conductive material and a binder, and
a weight ratio of the first functional additive in the first positive electrode active material layer is less than a weight ratio of the second functional additive in the second positive electrode active material layer,

**Formula 1** $\qquad Li_{a1}Mn_{z1}Fe_{x1}B1_{y1}PO_{4-c1}$,

wherein in Formula 1,
B1 is at least one element selected from among the group consisting of Al, Ti, V, and Mg,

$$0.8 < a1 \leq 1.2,$$

$$0.4 \leq z1 \leq 0.8,$$

$$0.2 \leq x1 \leq 0.6,$$

$$0 \leq y1 \leq 0.05,$$

and

$$0 \leq c1 \leq 0.05,$$

**Formula 2** $\qquad Li_{a2}Mn_{x2}B2_{y2}O_{4-c2}$,

wherein in Formula 2,
B2 is at least one element selected from among the group consisting of Al and Mg,

$$0.8 < a2 \leq 1.2,$$

$$1.9 \leq x2 \leq 2.05,$$

$$0 \le y2 \le 0.05,$$

and

$$0 \le c2 \le 0.05, a$$

and

**Formula** 3 $\quad$ $Li_{a3}Mn_{z3}Fe_{x3}B3_{y3}PO_{4-c3},$

wherein in Formula 3,
B3 is at least one element selected from among the group consisting of Al, Ti, V, and Mg,

$$0.8 < a3 \le 1.2,$$

$$0.4 \le z3 \le 0.8,$$

$$0 \le x3 \le 0.6,$$

$$0 \le y3 \le 0.05,$$

and

$$0 \le c3 \le 0.05.$$

10. The positive electrode as claimed in claim 9, wherein a ratio of the weight ratio of the second functional additive in the second positive electrode active material layer to the weight ratio of the first functional additive in the first positive electrode active material layer is about 1.5 to about 3.0.

11. The positive electrode as claimed in claim 9 or claim 10, wherein the weight ratio of the first functional additive in the first positive electrode active material layer is about 2.4 wt% to about 6.0 wt%.

12. The positive electrode as claimed in any one of claims 9 to 11, wherein the weight ratio of the second functional additive in the second positive electrode active material layer is about 4.0 wt% to about 10.0 wt%.

13. The positive electrode as claimed in any one of claims 9 to 12, wherein a thickness ratio of the second positive electrode active material layer to the first positive electrode active material layer is about 0.8 to about 1.2.

14. The positive electrode as claimed in any one of claims 9 to 13, wherein the second particle is in a form of a secondary particle, the secondary particle being an agglomeration of a plurality of primary particles, and the secondary particle has an average particle diameter (D50) of about 3 μm to about 10 μm.

15. The positive electrode as claimed in any one of claims 9 to 14, wherein with respect to a total weight of the first particle, the second particle, and the third particle in the positive electrode, a total weight of the second particle is about 15 wt% to about 30 wt%.

# FIG. 1

# FIG. 2

# FIG. 3

# FIG. 4

# FIG. 5

# FIG. 6

10

ATL2 ⎱
        ⎰ AML1
ATL1

COL1

# FIG. 7

ATL1

PTC1(SP1)   PTC1(SP1)

BND(BND1)

ADD1

CDM(CDM1)

NNP_2   NNP_2
PTC2

# FIG. 8

ATL2

PTC3(SP3)  PTC3(SP3)

BND(BND2)

ADD2

CDM(CDM2)

FIG. 9

FIG. 10

FIG. 11